(19) Europäisches Patentamt
European Patent Office
Office européen des brevets

(11) EP 3 342 837 A1

(12) # EUROPEAN PATENT APPLICATION
published in accordance with Art. 153(4) EPC

(43) Date of publication:
**04.07.2018 Bulletin 2018/27**

(21) Application number: **16841415.9**

(22) Date of filing: **05.08.2016**

(51) Int Cl.:
***C09J 109/00*** *(2006.01)* ***C09J 7/00*** *(2018.01)*
***C09J 133/02*** *(2006.01)* ***C09J 133/04*** *(2006.01)*
***H01G 11/38*** *(2013.01)* ***H01M 4/13*** *(2010.01)*
***H01M 4/24*** *(2006.01)* ***H01M 4/62*** *(2006.01)*

(86) International application number:
**PCT/JP2016/073129**

(87) International publication number:
**WO 2017/038383 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.08.2015 JP 2015168391**

(71) Applicant: **JSR Corporation**
**Minato-ku**
**Tokyo 105-8640 (JP)**

(72) Inventors:
- **TANAKA, Naruki**
  **Tokyo 105-8640 (JP)**
- **LIU, Jian**
  **Tokyo 105-8640 (JP)**
- **ITOU, Toshiyuki**
  **Tokyo 105-8640 (JP)**
- **MATSUDA, Nobuhiro**
  **Tokyo 105-8640 (JP)**
- **OTSUKA, Yoshiharu**
  **Tokyo 105-8640 (JP)**

(74) Representative: **TBK**
**Bavariaring 4-6**
**80336 München (DE)**

(54) **COMPOSITION FOR ADHESIVE AND ADHESIVE FILM, COMPOSITION FOR POWER STORAGE DEVICE, SLURRY FOR POWER STORAGE DEVICE ELECTRODE, POWER STORAGE DEVICE ELECTRODE, SLURRY FOR PROTECTIVE FILM, AND POWER STORAGE DEVICE**

(57) Provided are a composition for an adhesive , which has an adhesive characteristic that hardly changes along with a temperature change, and an adhesive film excellent in productivity, molding processability, and adhesive property. Also provided is a composition for an electrical storage device, which can form a layer excellent in adhesiveness with a current collector or a separator, and enables the production of an electrical storage device excellent in charge-discharge characteristic. The composition according to the present invention includes: heterophasic polymer particles (A); and a liquid medium (B), in which the heterophasic polymer particles (A) each have: a repeating unit derived from a conjugated diene; a repeating unit derived from an unsaturated carboxylic acid ester; and a repeating unit derived from an unsaturated carboxylic acid.

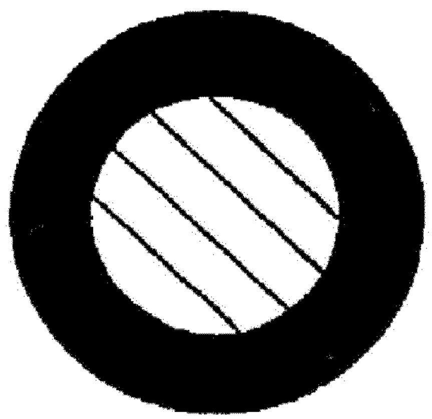

FIG. 1

EP 3 342 837 A1

**Description**

Technical Field

The present invention relates to a composition for an adhesive and an adhesive film. The present invention also relates to a composition for an electrical storage device, a slurry for an electrical storage device electrode, an electrical storage device electrode, a slurry for a protective film, and an electrical storage device.

Background Art

An adhesive film may be generally produced by a production method involving applying an adhesive to a base material film as described in Patent Literature 1, or by a method involving integrally molding a base material layer and an adhesive layer by a coextrusion method as described in Patent Literature 2 or Patent Literature 3. As a material to be used for producing the adhesive layer, there may be used an ethylene-vinyl acetate copolymer, or such a conjugated diene-based adhesive as described in Patent Literature 2 or Patent Literature 3.

Meanwhile, a positive electrode or negative electrode to be used for an electrical storage device (hereinafter sometimes referred to as "electrical storage device electrode" or simply as "electrode") is produced by, as described in Patent Literature 4, applying a mixture of an active material and a binder to a surface of a current collector and drying the mixture to form a layer of an active material-containing composition for an electrode (hereinafter sometimes referred to as "active material layer") on the surface of the current collector. In addition, in recent years, there has also been proposed a technology involving applying a mixture of inorganic particles and a binder to a surface of a separator and drying the mixture to form a protective film capable of withstanding dendrites on the surface of the separator. In addition, as described in Patent Literature 5, in the field of electrical storage devices, a layer containing an active material or inorganic particles is generally arranged on a surface of an electrode or a separator.

Characteristics demanded of such binder include: bonding of active materials or fillers to each other; an adhesive ability between an active material layer and a current collector; an adhesive ability between a protective film containing a filler, and a separator or an active material layer; abrasion resistance in a process of winding an electrode or separator including such layer; and powder fall-off resistance that prevents fine powder or the like from being formed from the applied active material layer or protective film in subsequent cutting or the like. With regard to the bonding ability between active materials or fillers, the binding ability between an active material and a current collector, the adhesive ability between a protective film containing a filler, and a separator or an active material layer, and the powder fall-off resistance thereof, it has been empirically revealed that their qualities of performance have a nearly proportional relationship with each other. Therefore, those properties are hereinafter sometimes collectively referred to with the term "adhesiveness".

As the binder for an electrode, for example, there has been proposed a technology involving using a rubber-based polymer in combination with another polymer (see Patent Literature 6). As the binder for a protective film, for example, there has been proposed a technology involving using a fluororesin in combination with a rubber-based resin (see Patent Literature 7).

Citation List

Patent Literature

[PTL 1] JP 2003-238927 A
[PTL 2] JP 2003-041216 A
[PTL 3] JP 2010-255007 A
[PTL 4] JP 2013-30449 A
[PTL 5] JP 2011-5867 A
[PTL 6] JP 2012-151108 A
[PTL 7] JP 2009-54455 A

Summary of Invention

Technical Problem

However, the above-mentioned related art in each of the technical fields has had a problem of being insufficient in terms of adhesive characteristic. Specifically, the related-art adhesive has had the following problem. The adhesive

property of the adhesive film changes along with a temperature change. For example, as the temperature increases, the adhesive characteristic of the adhesive film decreases. Meanwhile, the related-art binder for an electrode has been insufficient in terms of bonding ability between active materials or fillers and binding ability between an active material and a current collector, and the related-art binder for a protective film has been insufficient in terms of adhesive ability between a protective film containing a filler, and a separator or an active material layer.

The present invention has been made in view of the above-mentioned problems of the related art. An object of the present invention is to provide a composition for an adhesive , which has an adhesive characteristic that hardly changes along with a temperature change, and to provide an adhesive film excellent in productivity, molding processability, and adhesive property. Another object of the present invention is to provide a composition for an electrical storage device, which can form a layer excellent in adhesiveness with a current collector or a separator, and enables the production of an electrical storage device excellent in charge-discharge characteristic.

Solution to Problem

The present invention has been made in order to solve at least part of the above-mentioned problems, and can be realized as the following aspects or application examples.

[Application Example 1]

According to one embodiment of the present invention, there is provided a composition for an adhesive , including:

heterophasic polymer particles (A); and
a liquid medium (B),
in which the heterophasic polymer particles (A) each have:

a repeating unit derived from a conjugated diene;
a repeating unit derived from an unsaturated carboxylic acid ester; and
a repeating unit derived from an unsaturated carboxylic acid.

[Application Example 2]

In the composition for an adhesive according to Application Example 1, when the heterophasic polymer particles (A) are subjected to differential scanning calorimetry (DSC) in conformity to JIS K7121, two or more endothermic peaks in a temperature range of from -100°C to 0°C may be observed.

[Application Example 3]

In the composition for an adhesive according to Application Example 1 or 2, the heterophasic polymer particles (A) may have a number average particle diameter of from 50 nm to 400 nm.

[Application Example 4]

In the composition for an adhesive according to any one of Application Examples 1 to 3, the heterophasic polymer particles (A) may each have a THF insoluble content of 30% or less.

[Application Example 5]

According to one embodiment of the present invention, there is provided an adhesive film, which is produced using the composition for an adhesive of any one of Application Examples 1 to 4.

[Application Example 6]

According to one embodiment of the present invention, there is provided a composition for an electrical storage device, including:

heterophasic polymer particles (A); and
a liquid medium (B),

in which the heterophasic polymer particles (A) each have:

a phase containing 60 mass% or more of a repeating unit derived from a conjugated diene; and
a phase containing 80 mass% or more in total of a repeating unit derived from an unsaturated carboxylic acid ester and a repeating unit derived from an unsaturated carboxylic acid.

[Application Example 7]

In the composition for an electrical storage device according to Application Example 6, when the heterophasic polymer particles (A) are subjected to differential scanning calorimetry (DSC) in conformity to JIS K7121, two or more endothermic peaks in a temperature range of from -100°C to 0°C may be observed.

[Application Example 8]

In the composition for an electrical storage device according to Application Example 6 or 7, the heterophasic polymer particles (A) may have a number average particle diameter of from 50 nm to 400 nm.

[Application Example 9]

In the composition for an electrical storage device according to any one of Application Examples 6 to 8, the heterophasic polymer particles (A) may each have a THF insoluble content of 50% or more.

[Application Example 10]

According to one embodiment of the present invention, there is provided a slurry for an electrical storage device electrode, including:

the composition for an electrical storage device of any one of Application Examples 6 to 9; and
an active material.

[Application Example 11]

According to one embodiment of the present invention, there is provided an electrical storage device electrode, including:

a current collector; and
a layer, which is produced on a surface of the current collector using the slurry for an electrical storage device electrode of Application Example 10.

[Application Example 12]

According to one embodiment of the present invention, there is provided an electrical storage device, including the electrical storage device electrode of Application Example 11.

[Application Example 13]

According to one embodiment of the present invention, there is provided a slurry for a protective film, including:

the composition for an electrical storage device of any one of Application Examples 6 to 9; and
inorganic particles.

[Application Example 14]

According to one embodiment of the present invention, there is provided an electrical storage device electrode, including a protective film produced using the slurry for a protective film of Application Example 13.

[Application Example 15]

According to one embodiment of the present invention, there is provided an electrical storage device, including the electrical storage device electrode of Application Example 14.

Advantageous Effects of Invention

According to the composition for an adhesive of the present invention, the composition for an adhesive which has an adhesive characteristic that hardly changes along with a temperature change can be provided, and the adhesive film excellent in productivity, molding processability, and adhesive property can be provided. According to the composition for an electrical storage device of the present invention, the composition for an electrical storage device, which can form a layer excellent in adhesiveness with a current collector or a separator, and enables the production of an electrical storage device excellent in charge-discharge characteristic, can be provided.

Brief Description of Drawings

FIG. 1 is a cross-sectional view of a heterophasic polymer particle having a core-shell heterophasic structure.
FIG. 2 is a cross-sectional view of a heterophasic polymer particle having an island-in-sea heterophasic structure.
FIG. 3 is a cross-sectional view of a heterophasic polymer particle having an ocellated octopus-like heterophasic structure.
FIG. 4 is a cross-sectional view of a heterophasic polymer particle having another ocellated octopus-like heterophasic structure.
FIG. 5 is a cross-sectional view of a heterophasic polymer particle having a side-by-side heterophasic structure.
FIG. 6 is a cross-sectional view of a heterophasic polymer particle having a multiparticle heterophase-type heterophasic structure.
FIG. 7 is a cross-sectional view of a heterophasic polymer particle having a raspberry-like heterophasic structure.
FIG. 8 is a cross-sectional view of a heterophasic polymer particle having another multiparticle heterophase-type heterophasic structure.
FIG. 9 is a cross-sectional view of a heterophasic polymer particle having a Daruma-shaped heterophasic structure.
FIG. 10 is a cross-sectional view for schematically illustrating an electrical storage device electrode according to a first embodiment.
FIG. 11 is a cross-sectional view for schematically illustrating an electrical storage device electrode according to a second embodiment.
FIG. 12 is a cross-sectional view for schematically illustrating a separator for an electrical storage device according to an embodiment of the present invention.

Description of Embodiments

Preferred embodiments of the present invention are described in detail below. It should be appreciated that the present invention is not limited to the following embodiments, and includes various modification examples performed within the range not changing the gist of the present invention. As used herein, "(meth)acrylic acid ···" is a concept comprehending both of "acrylic acid ···" and "methacrylic acid ···". In addition, "··· (meth)acrylate" is a concept comprehending both of "··· acrylate" and "··· methacrylate". In addition, "(meth)allyl" is a concept comprehending both of "allyl" and "methallyl".

1. Composition for Adhesive

A composition for an adhesive according to one embodiment of the present invention contains heterophasic polymer particles (A) and a liquid medium (B), in which the heterophasic polymer particles (A) each have a repeating unit derived from a conjugated diene, a repeating unit derived from an unsaturated carboxylic acid ester, and a repeating unit derived from an unsaturated carboxylic acid. Each component contained in the composition for an adhesive according to this embodiment is described in detail below.

1.1. Heterophasic Polymer Particles (A)

The heterophasic polymer particles (A) are particles in each of which two or more polymers having different

chemical structures form a heterophasic structure. Herein, the "heterophasic structure" means that a particle structure is constituted not of a single uniform phase, but of two or more phases different from each other.

The heterophasic polymer particles to be used in the present invention are single particles each formed of two or more polymers having different chemical structures, and are not particles each formed of a uniform phase formed of a single polymer. That is, it is essential that a single particle contain two or more polymers having different chemical structures (these polymers are generally a polymer mainly contributing to an adhesive property and a polymer contributing to pressure-sensitive adhesion durability). When a composition for an adhesive obtained by mixing polymer particles of a single chemical structure mainly having an adhesive property and polymer particles of a single chemical structure mainly having pressure-sensitive adhesion durability is used, it is extremely difficult to uniformly mix the polymer particles into the composition for an adhesive owing to, for example, a difference in specific gravity between the polymers, differences in surface tension and surface polarity between the particles, and a difference in size between the particles. However, when a plurality of polymers are used as one particle, such problem is eliminated.

With regard to the ratio of the two or more polymers constituting each of the heterophasic polymer particles, a weight ratio (A/B) of one principal polymer A and another principal polymer B in the polymers is preferably from 1/0.01 to 0.01/1, more preferably from 1/0.05 to 0.05/1. In addition, the total amount of the polymer A and the polymer B is 50 wt% or more, preferably 70 wt% or more, more preferably 85 wt% or more of the entirety of each of the heterophasic polymer particles.

The structure of each of the heterophasic polymer particles to be used in the present invention is generally not a completely mixed structure in which two or more polymers including a polymer mainly contributing to an adhesive property and a polymer mainly contributing to pressure-sensitive adhesion durability are uniformly present in one particle. Instead, in order to effectively exhibit both performances, i.e., the adhesive property and the pressure-sensitive adhesion durability, a heterophasic structure is formed by localizing two or more polymers having different chemical structures in one particle.

Herein, the heterophasic structure refers to a structure formed not of a single uniform phase, but of two or more phases different from each other. However, when a cross-section of such particle is looked at, in general, the plurality of phases are not uniformly distributed in shapes similar to each other, but assume a unique distribution morphology. Therefore, the heterophasic structure is also called a modified cross-section structure. As specific examples of the cross-section of the polymer particle having the heterophasic structure, there are given ones illustrated in FIG. 1 to FIG. 9. That is, there are given a core-shell heterophasic structure (FIG. 1), an island-in-sea heterophasic structure (FIG. 2), ocellated octopus-like heterophasic structures (FIG. 3 and FIG. 4), a side-by-side heterophasic structure (FIG. 5), a raspberry-like heterophasic structure (FIG. 7), multiparticle heterophase-type heterophasic structures (FIG. 6 and FIG. 8), a Daruma-shaped heterophasic structure (FIG. 9), and the like (see the description of "Adhesion and adhesives", Vol. 34, No. 1, pp. 13 to 23, particularly FIG. 6 shown on page 17). Of those heterophasic structures, a core-shell heterophasic structure (FIG. 1) is preferred. In addition, the following structure is also permitted: two or more of the various heterophasic structures as described above are further combined to form one heterophasic polymer particle.

The heterophasic polymer particles (A) each contain two or more polymers having different chemical structures, and are preferably heterophasic polymer particles each containing, as such polymers, a polymer having a repeating unit derived from a conjugated diene, which mainly contributes to the adhesive property, and a polymer having a repeating unit derived from an unsaturated carboxylic acid ester and a repeating unit derived from an unsaturated carboxylic acid, which mainly contributes to the pressure-sensitive adhesion durability. In addition, the heterophasic polymer particles (A) each more preferably contain a polymer containing 60 mass% or more of the repeating unit derived from a conjugated diene, and a polymer containing 80 mass% or more in total of the repeating unit derived from an unsaturated carboxylic acid ester and the repeating unit derived from an unsaturated carboxylic acid.

Further, a phase containing 60 mass% or more of the repeating unit derived from a conjugated diene preferably contains a polymer containing 60 mass% or more of the repeating unit derived from a conjugated diene. A phase containing 80 mass% or more in total of the repeating unit derived from an unsaturated carboxylic acid ester and the repeating unit derived from an unsaturated carboxylic acid preferably contains a polymer containing 80 mass% or more in total of the repeating unit derived from an unsaturated carboxylic acid ester and the repeating unit derived from an unsaturated carboxylic acid.

As described above, the heterophasic polymer particles (A) each have the repeating unit derived from a conjugated diene, the repeating unit derived from an unsaturated carboxylic acid ester, and the repeating unit derived from an unsaturated carboxylic acid. Each of the repeating units constituting the heterophasic polymer particles (A) is described below.

### 1.1.1. Repeating Unit derived from Conjugated Diene

When the heterophasic polymer particles (A) each have the repeating unit derived from a conjugated diene, it is easy to produce a composition for an adhesive excellent in viscoelasticity and strength. That is, when a polymer having

the repeating unit derived from a conjugated diene is used, the polymer can have high adhesive strength. Rubber elasticity derived from the conjugated diene is imparted to the polymer, and hence even when a base material serving as a pressure-sensitive adhesion target of the composition for an adhesive undergoes a change, such as volume shrinkage or expansion, due to a temperature change, the adhesive can follow the dimensional change. With this, it is considered that the adhesive property is improved, and moreover, long-term durability is obtained.

Examples of the conjugated diene may include 1,3-butadiene, 2-methyl-1,3-butadiene, 2,3-dimethyl-1,3-butadiene, and 2-chloro-1,3-butadiene, and the conjugated diene may be one or more kinds selected therefrom. The conjugated diene is particularly preferably 1,3-butadiene.

The content of the repeating unit derived from a conjugated diene is preferably from 1 part by mass to 60 parts by mass, more preferably from 2 parts by mass to 40 parts by mass with respect to 100 parts by mass of all repeating units of the heterophasic polymer particles (A). When the content of the repeating unit derived from a conjugated diene falls within the above-mentioned range, the adhesive property can be further improved.

1.1.2. Repeating Unit derived from Unsaturated Carboxylic Acid Ester

When the heterophasic polymer particles (A) each have the repeating unit derived from an unsaturated carboxylic acid ester, the adhesive strength becomes satisfactory, with the result that thermal deterioration is suppressed and weatherability is excellent. Accordingly, a decrease in adhesive property due to long-term use can be prevented. In addition, such adhesive has a wide range of choices for adherends, and hence can be used for various adherends.

Such unsaturated carboxylic acid ester is preferably a (meth)acrylic acid ester. Specific examples of the (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, and allyl (meth)acrylate, and the (meth)acrylic acid ester may be one or more kinds selected therefrom. Of those, one or more kinds selected from methyl (meth)acrylate, ethyl (meth)acrylate, 2-ethylhexyl (meth)acrylate, hydroxymethyl (meth)acrylate, and hydroxyethyl (meth)acrylate are preferred, and methyl (meth)acrylate, hydroxymethyl (meth)acrylate, and hydroxyethyl (meth)acrylate are particularly preferred.

The content of the repeating unit derived from an unsaturated carboxylic acid ester is preferably from 40 parts by mass to 95 parts by mass, more preferably from 80 parts by mass to 90 parts by mass with respect to 100 parts by mass of all repeating units of the heterophasic polymer particles (A). When the content of the repeating unit derived from an unsaturated carboxylic acid ester falls within the above-mentioned range, the heterophasic polymer particles to be obtained each have a moderately cross-linked structure between the polymers (between the particles, and within each particle), and the suppression of an excessively cross-linked structure can prevent a decrease in adhesive property.

1.1.3. Repeating Unit derived from Unsaturated Carboxylic Acid

When the heterophasic polymer particles (A) each have the repeating unit derived from an unsaturated carboxylic acid, the composition for an adhesive of the present invention is improved in particle stability during polymerization, and hence can be produced with a high solid content.

Specific examples of the unsaturated carboxylic acid may include monocarboxylic or dicarboxylic acids, such as acrylic acid, methacrylic acid, crotonic acid, maleic acid, fumaric acid, and itaconic acid, and the unsaturated carboxylic acid may be one or more kinds selected therefrom. The unsaturated carboxylic acid is particularly preferably one or more kinds selected from acrylic acid, methacrylic acid, and itaconic acid.

The content of the repeating unit derived from an unsaturated carboxylic acid is preferably 15 parts by mass or less, more preferably from 0.3 part by mass to 10 parts by mass with respect to 100 parts by mass of all repeating units of the heterophasic polymer particles (A). When the content of the repeating unit derived from an unsaturated carboxylic acid falls within the above-mentioned range, the dispersion stability of the heterophasic polymer particles (A) is excellent during the preparation of the composition for an adhesive , and hence an aggregate is less liable to be formed. In addition, a temporal increase in viscosity of the composition for an adhesive can also be suppressed.

1.1.4. Other Repeating Units

The heterophasic polymer particles (A) may each have a repeating unit other than those described above. Examples of the repeating unit other than those described above include a repeating unit derived from an aromatic vinyl compound and a repeating unit derived from an $\alpha,\beta$-unsaturated nitrile compound.

Specific examples of the aromatic vinyl compound may include styrene, α-methylstyrene, p-methylstyrene, vinyltoluene, chlorostyrene, and divinylbenzene, and the aromatic vinyl compound may be one or more kinds selected therefrom. Of those, styrene is particularly preferred as the aromatic vinyl compound.

Specific examples of the α,β-unsaturated nitrile compound may include acrylonitrile, methacrylonitrile, α-chloroacrylonitrile, α-ethylacrylonitrile, and vinylidene cyanide, and the α,β-unsaturated nitrile compound may be one or more kinds selected therefrom. Of those, one or more kinds selected from acrylonitrile and methacrylonitrile are preferred, and acrylonitrile is more preferred.

In addition, the heterophasic polymer particles (A) may each further have a repeating unit derived from any of the following compounds. Examples of such compound may include: fluorine-containing compounds each having an ethylenically unsaturated bond, such as vinylidene fluoride, ethylene tetrafluoride, and propylene hexafluoride; alkylamides of ethylenically unsaturated carboxylic acids, such as (meth)acrylamide and N-methylolacrylamide; carboxylic acid vinyl esters, such as vinyl acetate and vinyl propionate; acid anhydrides of ethylenically unsaturated dicarboxylic acids; and aminoalkyl amides of ethylenically unsaturated carboxylic acids, such as aminoethyl acrylamide, dimethylaminomethyl methacrylamide, and methylaminopropyl methacrylamide, and the compound may be one or more kinds selected therefrom.

1.1.5. Preparation of Heterophasic Polymer Particles (A)

A synthesis method for the heterophasic polymer particles (A) is not particularly limited, but, for example, the heterophasic polymer particles (A) may be produced by: a method involving two-stage polymerization, such as an emulsion polymerization method, a suspension polymerization method, a dispersion polymerization method, or a seeded polymerization method; or a method involving mixing a plurality of polymers in the presence or absence of a solvent, and solidifying and drying the mixture, followed by pulverization, or spray-drying the mixture by a method such as a spray-drying method to form powder. Specific examples of the production method for the heterophasic polymer particles (A) to be used in the present invention include: a method (two-stage polymerization method) involving polymerizing polymer particles by a conventional method to a polymerization conversion rate of from 20% to 100%, and subsequently adding a monomer for another polymer, followed by polymerization by a conventional method; and a method involving stirring and mixing two or more kinds of separately synthesized latex-like polymer particles (A) at from room temperature to 300°C for from 2 hours to 100 hours, to thereby obtain the heterophasic polymer particles (A).

As specific examples of an emulsifier to be used in any of those polymerization methods, there are given:an anionic surfactant, such as a sulfuric acid ester salt of a higher alcohol, an alkylbenzenesulfonic acid salt, an alkyl diphenyl ether disulfonic acid salt, an aliphatic sulfonic acid salt, an aliphatic carboxylic acid salt, a dehydroabietic acid salt, a naphthalenesulfonic acid-formalin condensate, or a sulfuric acid ester salt of a nonionic surfactant; a nonionic surfactant, such as an alkyl ester of polyethylene glycol, an alkyl phenyl ether of polyethylene glycol, or an alkyl ether of polyethylene glycol; and a fluorine-based surfactant, such as a perfluorobutylsulfonic acid salt, a perfluoroalkyl group-containing phosphoric acid ester, a perfluoroalkyl group-containing carboxylic acid salt, or a perfluoroalkyl ethylene oxide adduct, and one or more kinds selected therefrom may be used.

As specific examples of a polymerization initiator to be used in any of those polymerization methods, there may be used one appropriately selected from water-soluble polymerization initiators, such as lithium persulfate, potassium persulfate, sodium persulfate, and ammonium persulfate; and oil-soluble polymerization initiators, such as cumene hydroperoxide, benzoyl peroxide, t-butyl hydroperoxide, acetyl peroxide, diisopropylbenzene hydroperoxide, 1,1,3,3-tetramethylbutyl hydroperoxide, azobisisobutyronitrile, and 1,1'-azobis(cyclohexanecarbonitrile). Of those, potassium persulfate, sodium persulfate, cumene hydroperoxide, or t-butyl hydroperoxide is preferably particularly used. The use ratio of the polymerization initiator is not particularly limited, but is appropriately set in consideration of, for example, the combination of monomer composition, the pH of the polymerization reaction system, other additives, and the like.

As specific examples of a molecular weight modifier, there may be given alkyl mercaptans, such as n-hexyl mercaptan, n-octyl mercaptan, t-octyl mercaptan, n-dodecyl mercaptan, t-dodecyl mercaptan, and n-stearyl mercaptan; xanthogen compounds, such as dimethyl xanthogen disulfide and diisopropyl xanthogen disulfide; thiuram compounds, such as terpinolene, tetramethylthiuram disulfide, tetraethylthiuram disulfide, and tetramethylthiuram monosulfide; phenol compounds, such as 2,6-di-t-butyl-4-methylphenol and styrenated phenol; allyl compounds, such as allyl alcohol; halogenated hydrocarbon compounds, such as dichloromethane, dibromomethane, and carbon tetrabromide; vinyl ether compounds, such as α-benzyloxystyrene, α-benzyloxyacrylonitrile, and α-benzyloxyacrylamide; and triphenylethane, pentaphenylethane, acrolein, methacrolein, thioglycolic acid, thiomalic acid, 2-ethylhexyl thioglycolate, and an α-methylstyrene dimer, and one or more kinds selected therefrom may be used.

A polymerization temperature and a polymerization time may be arbitrarily selected depending on the polymerization method, the kind of the polymerization initiator to be used, and the like. The polymerization temperature is generally from about 35°C to about 80°C, and the polymerization time is generally from about 0.5 hour to about 20 hours. Further, in the polymerization, a generally known additive, for example, a polymerization aid, such as an amine, may

also be used. After the completion of emulsion polymerization, it is preferred that neutralization treatment be performed by adding a neutralizer so that a dispersion may have a pH of from about 5 to about 10. The neutralizer to be used is not particularly limited, but examples thereof generally include metal hydroxides, such as sodium hydroxide and potassium hydroxide, and ammonia.

1.1.6. Physical Properties of Heterophasic Polymer Particles (A)

The heterophasic polymer particles (A) to be used in the present invention are desirably such that the plurality of polymers for forming the particles include two kinds of polymers having an endothermic peak difference of 5°C or more. With this, both performances, i.e., the adhesive property and the pressure-sensitive adhesion durability are more effectively exhibited.

1.1.6.1. Transition Temperature

The heterophasic polymer particles (A) each preferably show two or more endothermic peaks in the temperature range of from -100°C to 0°C in measurement by differential scanning calorimetry (DSC) in conformity to JIS K7121. The temperatures of the endothermic peaks fall within the range of more preferably from -80°C to -20°C, particularly preferably from -70°C to -40°C. A case in which the temperatures of the two or more endothermic peaks of each of the heterophasic polymer particles (A) fall within the above-mentioned range is preferred because more satisfactory flexibility and a more satisfactory adhesive property can be imparted to the composition for an adhesive , with the result that adhesiveness can be further improved.

The heterophasic polymer particles (A) containing two polymers having an endothermic peak difference of 5°C or more, which are preferred in the present invention, are preferably produced by the above-mentioned two-stage emulsion polymerization process. When such preferred heterophasic polymer particles (A) are heterophasic polymer particles each formed of a low-endothermic peak polymer A and a high-endothermic peak polymer B, the difference between the endothermic peak of the polymer A and the endothermic peak of the polymer B is 5°C or more. When the heterophasic polymer particles (A) are each formed of the low-endothermic peak polymer A, the high-endothermic peak polymer B, and a polymer C having an arbitrary endothermic peak, it is only necessary that the difference between the endothermic peak of the polymer A and the endothermic peak of the polymer B be 5°C or more, and each of the difference between the endothermic peak of the polymer A and the endothermic peak of the polymer C, and the difference between the endothermic peaks of the polymer B and the polymer C may be 5°C or more, or may be less than 5°C. A polymer contributing to the pressure-sensitive adhesion durability is mainly the low-endothermic peak polymer, and a polymer contributing to the adhesive property is mainly the high-endothermic peak polymer. It is considered that the heterophasic polymer particles (A) each containing both the polymers have an adhesive property and pressure-sensitive adhesion durability in a well-balanced manner as a composition for an adhesive .

1.1.6.2. Number Average Particle Diameter

The number average particle diameter of the heterophasic polymer particles (A) falls within the range of preferably from 50 nm to 400 nm, more preferably from 80 nm to 250 nm. When the number average particle diameter of the heterophasic polymer particles (A) falls within the above-mentioned range, aggregation of the particles due to an increase in viscosity during polymerization and a pH-dependent increase in viscosity can be suppressed.

The number average particle diameter of the heterophasic polymer particles (A) refers to the value of a particle diameter (D50) at a cumulative frequency for the number of particles of 50% determined when the particles are accumulated in order of increasing particle size in a particle size distribution measured with a particle size distribution-measuring apparatus employing a light scattering method as its measurement principle. Examples of such particle size distribution-measuring apparatus may include Coulter LS230, LS100, and LS13 320 (which are manufactured by Beckman Coulter. Inc), and FPAR-1000 (manufactured by Otsuka Electronics Co., Ltd.). Each of those particle size distribution-measuring apparatus may use not only primary particles of polymer particles as evaluation targets, but also particles formed by aggregation of the primary particles as evaluation targets. Therefore, the particle size distribution measured with any of those particle size distribution-measuring apparatus can serve as an indicator of the dispersion state of the polymer particles contained in the composition for an adhesive .

1.1.6.3. Tetrahydrofuran (THF) Insoluble Content

Herein, a tetrahydrofuran insoluble content means a tetrahydrofuran insoluble content contained in copolymer latex, and the THF insoluble content of each of the heterophasic polymer particles (A) is preferably 30% or less, more preferably 10% or less. The THF insoluble content within the above-mentioned range may be presumed to be satisfactory

because a decrease in adhesive strength due to an excessively cross-linked structure can be suppressed.

1.1.6.4. Methyl Ethyl Ketone (MEK) Insoluble Content

Herein, a methyl ethyl ketone insoluble content means a methyl ethyl ketone insoluble content contained in copolymer latex, and the MEK insoluble content of each of the heterophasic polymer particles (A) is preferably 30% or less, more preferably 15% or less. It may be presumed that when the MEK insoluble content falls within the above-mentioned range, a decrease in adhesive strength due to an excessively cross-linked structure can be suppressed.

1.2. Liquid Medium (B)

The composition for an adhesive according to this embodiment contains the liquid medium (B). The liquid medium (B) is preferably an aqueous medium containing water. The aqueous medium may contain a non-aqueous medium other than water. Examples of the non-aqueous medium may include an amide compound, a hydrocarbon, an alcohol, a ketone, an ester, an amine compound, a lactone, a sulfoxide, and a sulfone compound, and one or more kinds selected therefrom may be used. When the liquid medium (B) contains water and the non-aqueous medium other than water, the content of water is preferably 90 mass% or more, more preferably 95 mass% or more, still more preferably 98 mass% or more in 100 mass% of the total amount of the liquid medium (B). When the composition for an adhesive according to this embodiment uses the aqueous medium as the liquid medium (B), the composition adversely affects an environment to a less degree and is highly safe for a worker who handles the composition.

The content of the non-aqueous medium in the aqueous medium is preferably 10 parts by mass or less, more preferably 5 parts by mass or less, still more preferably 2 parts by mass or less with respect to 100 parts by mass of the aqueous medium. It is particularly preferred that the aqueous medium be substantially free of the non-aqueous medium. Herein, the phrase "be substantially free" merely means that the non-aqueous medium is not intentionally added as the liquid medium, and the aqueous medium may contain the non-aqueous medium that is inevitably mixed during the production of the composition for an adhesive .

1.3. Other Components

The composition for an adhesive according to this embodiment may contain an additive other than the above-mentioned heterophasic polymer particles (A) and liquid medium (B) as necessary. Examples of such additive include an isothiazoline-based compound, a thickener, a filler, a polymer, a colorant, and a flame retardant.

<Isothiazoline-based Compound>

The composition for an adhesive according to this embodiment preferably contains 50 ppm or more and less than 200 ppm of the isothiazoline-based compound. When the isothiazoline-based compound is added within the concentration range of from 50 ppm or more and less than 200 ppm in the composition for an adhesive , the isothiazoline-based compound can act as a preservative to suppress the generation of foreign matter due to the growth of bacteria, mold, or the like during the storage of the composition for an adhesive . Further, deterioration of the composition for an adhesive is suppressed, and hence a decrease in adhesive characteristic can be suppressed.

In addition, in general, when a new component is added to a dispersion of polymer particles like latex, the new component is liable to serve as a trigger for the occurrence of aggregation. However, when the content of the isothiazoline-based compound is 50 ppm or more and less than 200 ppm, its influence on the dispersibility of the polymer particles is small, and hence the formation of an aggregate can be suppressed. As a result, the adhesive property is presumed to become satisfactory.

The isothiazoline-based compound that may be contained in the composition for an adhesive according to this embodiment is not particularly limited as long as the compound has an isothiazoline skeleton, but specific examples thereof include a compound represented by the following general formula (1) and a compound represented by the following general formula (2).

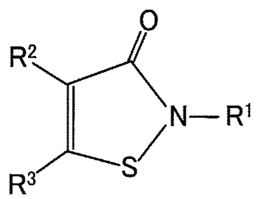 ····· (1)

In the general formula (1), $R^1$ represents a hydrogen atom or a hydrocarbon group, and $R^2$ and $R^3$ each independently represent a hydrogen atom, a halogen atom, or a hydrocarbon group. When $R^1$, $R^2$, and $R^3$ each represent a hydrocarbon group, the hydrocarbon group may have a chain carbon skeleton, such as a linear chain or a branched chain, or may have a cyclic carbon skeleton. In addition, the number of carbon atoms of the hydrocarbon group is preferably from 1 to 12, more preferably from 1 to 10, particularly preferably from 1 to 8. Specific examples of such hydrocarbon group include a methyl group, an ethyl group, a propyl group, an isopropyl group, a butyl group, a hexyl group, a cyclohexyl group, an octyl group, and a 2-ethylhexyl group.

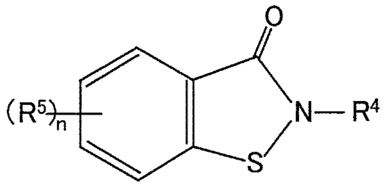 ····· (2)

In the general formula (2), $R^4$ represents a hydrogen atom or a hydrocarbon group, and $R^5$'s each independently represent a hydrogen atom or an organic group. When $R^4$ represents a hydrocarbon group, the hydrocarbon group may be a hydrocarbon group similar to the hydrocarbon group described for the general formula (1). In addition, when $R^5$ represents an organic group, the organic group includes aliphatic groups and alicyclic groups that are alkyl groups and cycloalkyl groups, but is preferably an aliphatic group. The number of carbon atoms of the alkyl group is preferably from 1 to 12, more preferably from 1 to 10, particularly preferably from 1 to 8. Those alkyl groups and cycloalkyl groups may each have a substituent, such as a halogen atom, an alkoxyl group, a dialkylamino group, an acyl group, or an alkoxycarbonyl group. Specific examples of the aliphatic group include a methyl group, an ethyl group, a propyl group, an isopropyl group, a butyl group, a hexyl group, a cyclohexyl group, an octyl group, and a 2-ethylhexyl group. In the general formula (2), n represents an integer of from 0 to 4.

Specific examples of the isothiazoline-based compound that may be contained in the composition for an adhesive according to this embodiment include 1,2-benzoisothiazolin-3-one, 1,2-methyl-4,5-trimethylene-4-isothiazolin-3-one, 2-methyl-4-isothiazolin-3-one, 5-chloro-2-methyl-4-isothiazolin-3-one, N-n-butyl-1,2-benzisothiazolin-3-one, 2-n-octyl-4-isothiazolin-3-one, and 4,5-dichloro-2-n-octyl-4-isothiazolin-3-one, and one kind or two or more kinds thereof may be used. Of those, at least one kind selected from the group consisting of 2-methyl-4-isothiazolin-3-one, 2-n-octyl-4-isothiazolin-3-one, 5-chloro-2-methyl-4-isothiazolin-3-one, and 1,2-benzoisothiazolin-3-one is preferred.

<Thickener>

Examples of the thickener that may be contained in the composition for an adhesive according to this embodiment may include: cellulose compounds, such as carboxymethyl cellulose, methyl cellulose, and hydroxypropyl cellulose; ammonium salts or alkali metal salts of the cellulose compounds; polycarboxylic acids, such as poly(meth)acrylic acid and modified poly(meth)acrylic acid; alkali metal salts of the polycarboxylic acids; polyvinyl alcohol-based (co)polymers, such as polyvinyl alcohol, modified polyvinyl alcohol, and an ethylene-vinyl alcohol copolymer; and water-soluble polymers, such as a saponified product of a copolymer of an unsaturated carboxylic acid, such as (meth)acrylic acid, maleic acid, or fumaric acid, and a vinyl ester. Of those, an alkali metal salt of carboxymethyl cellulose, an alkali metal salt of poly(meth)acrylic acid, or the like is particularly preferred as the thickener.

As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).

When the composition for an adhesive according to this embodiment contains the thickener, the use ratio of the thickener is preferably 5 mass% or less, more preferably from 0.1 mass% to 3 mass% with respect to the total solid content of the composition for an adhesive .

1.4. Damping Property

The loss tangent (tan $\delta$) of the composition for an adhesive according to this embodiment determined by dynamic viscoelasticity measurement does not significantly depend on measurement temperature or measurement frequency. As a result, the composition for an adhesive according to this embodiment expresses a satisfactory damping property. Specifically, an adhesive sheet produced from the composition for an adhesive according to this embodiment has a loss tangent at from 15°C to 80°C of 0.5 or more at 1 Hz, and has a difference ($\Delta$tan $\delta$) between the maximum loss tangent and minimum loss tangent obtained as a result of the evaluation of the temperature dependence of the loss tangent of 0.1 or less. In addition, the adhesive sheet has a loss tangent at 40°C of 0.5 or more at each of 1 Hz, 5 Hz, 10 Hz, and

15 Hz, and a difference (Δtan δ) between the maximum loss tangent and minimum loss tangent obtained as a result of the evaluation of the frequency dependence of the loss tangent of 0.05 or less.

In general, a loss tangent is a numerical value obtained by dividing a loss elastic modulus obtained through dynamic viscoelasticity measurement by a storage elastic modulus. The loss of the elastic modulus means the release of oscillation (frequency) as thermal energy, i.e., damping, and hence a larger loss tangent (e.g. 0.5 or more) means more excellent damping performance. In addition, the loss tangent of a polymer material generally depends on temperature and measurement frequency, and its damping performance is degraded at high temperature or various oscillation frequencies. Therefore, a composition for an adhesive having a loss tangent that does not depend on temperature or measurement frequency may be judged to be excellent in damping performance in a wide range of use conditions.

2. Base Material Layer

A material constituting a base material layer of an adhesive film of the present invention is described. The material constituting the base material layer is preferably a material containing a thermoplastic resin as a main component. As the thermoplastic resin constituting the base material layer, an olefin-based resin is preferred, and a polyethylene-, polypropylene-, or polybutene-based (co)polymer may be suitably used.

Specific examples of the thermoplastic resin constituting the base material layer may include a propylene-ethylene copolymer, a propylene-butene-1 copolymer, a butene-1-ethylene copolymer, a propylene-ethylene-butene-1 copolymer, an ethylene-vinyl acetate copolymer, an ethylene-ethyl acrylate copolymer, an ethylene-ethyl methacrylate copolymer, an ethylene-methyl acrylate copolymer, an ethylene-methyl methacrylate copolymer, and an ethylene-n-butyl acrylate copolymer. Those thermoplastic resins may be used alone or in combination thereof.

The base material layer preferably contains a thermoplastic resin as a main component, and may be appropriately blended with an additive, for example, a filler, such as calcium oxide, magnesium oxide, silica, zinc oxide, or titanium oxide, a pigment, an anti-build up agent, a lubricant, or an antiblocking agent as well as an antioxidant, a UV absorber, a light stabilizer, such as a hindered amine-based light stabilizer, or an antistatic agent for the purpose of, for example, preventing degradation.

3. Adhesive Film

An adhesive film according to an embodiment of the present invention is a film including a base material layer and an adhesive layer arranged on one surface or both surfaces of the base material layer. When the adhesive film is produced by applying a composition for an adhesive to the base material layer, the adhesive film may be produced by applying the above-mentioned composition for an adhesive to one surface or both surfaces of a base material layer having a thickness of from about 2 μm to about 150 μm, and performing cross-linking treatment through the application of heat or UV light as necessary, to thereby form an adhesive layer having a thickness of from 5 μm to 200 μm. In addition, one surface of the base material layer may be subjected to release treatment to provide an adhesive film for transfer. In the application of the composition for an adhesive to the base material layer, the composition for an adhesive may be applied in a state in which its viscosity is decreased by heating as necessary, and specifically, a hot-melt coater, a comma roll, a gravure coater, a roll coater, a kiss coater, a slot-die coater, a squeeze coater, or the like may be used.

When the adhesive film is integrally molded out of a composition for an adhesive and a composition for a base material by a coextrusion method, the adhesive film may be produced by forming an adhesive layer having a thickness of from 5 μm to 200 μm through the application of heat or UV light with a cross-linking agent added as necessary. The thus produced adhesive film may be used in a shape such as a tape shape or a sheet shape as necessary.

The use of sulfur or a sulfur-based vulcanizing agent or vulcanization accelerator, which is generally used for cross-linking of a rubber, causes sulfide ions or sulfate ions to be generated in a large amount to bleed out of the adhesive layer in some cases, and hence is not preferred. In addition, in cross-linking using a peroxide, it is sometimes difficult to obtain sufficient heat resistance.

4. Composition for Electrical Storage Device

A composition for an electrical storage device according to an embodiment of the present invention contains heterophasic polymer particles (A) and a liquid medium (B), in which the heterophasic polymer particles (A) each have a phase containing 60 mass% of a repeating unit derived from a conjugated diene, and a phase containing 80 mass% or more in total of a repeating unit derived from an unsaturated carboxylic acid ester and a repeating unit derived from an unsaturated carboxylic acid.

The composition for an electrical storage device according to this embodiment may be used as a binder for an electrode for forming an active material layer on the surface of a current collector, and may also be used as a binder for a protective film for forming a protective film on the surface of a separator and/or an electrode. Each component contained

in the composition for an electrical storage device according to this embodiment is described in detail below.

4.1. Heterophasic Polymer Particles (A)

When the composition for an electrical storage device according to this embodiment is used as the binder for an electrode, the heterophasic polymer particles (A) contained in the composition for an electrical storage device according to this embodiment have a function of binding active materials to each other and improving adhesiveness between the active material layer and the current collector. Meanwhile, when the composition for an electrical storage device according to this embodiment is used as the binder for a protective film, the heterophasic polymer particles (A) have a function of binding inorganic particles to each other and improving adhesiveness between the surface of the separator and/or the electrode and the protective film.

As the heterophasic polymer particles (A), heterophasic polymer particles (A) similar to those of the above-mentioned composition for an adhesive may be used. However, the heterophasic polymer particles (A) contained in the composition for an electrical storage device each have an essential configuration of having a phase containing 60 mass% or more of a repeating unit derived from a conjugated diene, and a phase containing 80 mass% or more in total of a repeating unit derived from an unsaturated carboxylic acid ester and a repeating unit derived from an unsaturated carboxylic acid.

In general, a polymer having the repeating unit derived from an unsaturated carboxylic acid ester is considered to have satisfactory adhesiveness, but have unsatisfactory viscoelasticity. As a result, an electrode or protective film produced with only the polymer having the repeating unit derived from an unsaturated carboxylic acid ester has had a tendency that an active material or inorganic particles are detached when subjected to an impact. In addition, a polymer having the repeating unit derived from a conjugated diene is considered to have satisfactory viscoelasticity, but have unsatisfactory adhesiveness. As a result, an electrode or protective film produced with only the polymer having the repeating unit derived from a conjugated diene has had a tendency that the active material or the inorganic particles are detached when subjected to processing involving winding or the like.

Further, when a composition for an electrical storage device is produced by mixing the polymer having the repeating unit derived from an unsaturated carboxylic acid ester and the polymer having the repeating unit derived from a conjugated diene, the polymers merely allow adhesion of the active material or the inorganic particles at separate bonding points, and hence it has been difficult to ameliorate the tendency that the active material or the inorganic particles are detached owing to, for example, an impact on the electrode or the protective film, or processing involving winding or the like.

In contrast, the heterophasic polymer particles (A) contained in the composition for an electrical storage device according to this embodiment each have the phase containing 60 mass% or more of the repeating unit derived from a conjugated diene, and the phase containing 80 mass% or more in total of the repeating unit derived from an unsaturated carboxylic acid ester and the repeating unit derived from an unsaturated carboxylic acid. When the above-mentioned phases are present in a single particle as described above, the polymers contained in the respective phases allow adhesion of the active material or the inorganic particles at the same bonding point. As a result, it is considered that the detachment of the active material or the inorganic particles can be effectively suppressed even when, for example, an impact on the electrode or the protective film, or processing involving winding or the like is applied.

The THF insoluble content of each of the heterophasic polymer particles (A) contained in the composition for an electrical storage device according to this embodiment is preferably 50% or more, more preferably 80% or more in view of the need to secure insolubility in an organic electrolytic solution, unlike in the case of the above-mentioned composition for an adhesive .

The MEK insoluble content of each of the heterophasic polymer particles (A) contained in the composition for an electrical storage device according to this embodiment is preferably 50% or more, more preferably 80% or more in view of the need to secure insolubility in an organic electrolytic solution, unlike in the case of the above-mentioned composition for an adhesive .

4.2. Liquid Medium (B)

The composition for an electrical storage device according to this embodiment contains the liquid medium (B). As the liquid medium (B), the same liquid medium as that of the above-mentioned composition for an adhesive may be used. For the description of the liquid medium (B), the same description as that for the composition for an adhesive applies.

4.3. Other Additives

The composition for an electrical storage device according to this embodiment may contain an additive other than the above-mentioned components as necessary. As such additive, the same additives as those of the above-mentioned composition for an adhesive may be used. For the description of the additive, the same description as that for the composition for an adhesive applies.

5. Slurry for Electrical Storage Device

The above-mentioned composition for an electrical storage device may be used to produce a slurry for an electrical storage device according to an embodiment of the present invention. The slurry for an electrical storage device according to this embodiment may be broadly classified into two kinds, i.e., a slurry for an electrical storage device electrode and a slurry for a protective film.

5.1. Slurry for Electrical Storage Device Electrode

The slurry for an electrical storage device electrode refers to a dispersion to be used for forming an active material layer on the surface of a current collector by being applied to the surface of the current collector and then dried. The slurry for an electrical storage device electrode according to this embodiment contains the above-mentioned composition for an electrical storage device, and an active material. The components contained in the slurry for an electrical storage device electrode according to this embodiment are described in detail below. However, the composition for an electrical storage device is as described above, and hence the description thereof is omitted.

5.1.1. Active Material

A material constituting the active material included in the slurry for an electrical storage device electrode according to this embodiment is not particularly limited, and an appropriate material may be appropriately selected depending on the kind of the electrical storage device of interest. Examples of the active material may include a carbon material, a silicon material, an oxide containing a lithium atom, a lead compound, a tin compound, an arsenic compound, an antimony compound, and an aluminum compound.

Examples of the carbon material include amorphous carbon, graphite, natural graphite, mesocarbon microbeads (MCMB), and pitch-based carbon fiber.

Examples of the silicon material may include a silicon simple substance, a silicon oxide, and a silicon alloy. In addition, for example, SiC, $SiO_xC_y$ ($0<x\leq3$, $0<y\leq5$), $Si_3N_4$, $Si_2N_2O$, a Si oxide composite represented by $SiO_x$ ($0<x\leq2$) (e.g., a material described in JP 2004-185810 A or JP 2005-259697 A), or a silicon material described in JP 2004-185810 A may also be used. The silicon oxide is preferably a silicon oxide represented by the compositional formula $SiO_x$ ($0<x<2$, preferably $0.1\leq x\leq1$). The silicon alloy is preferably an alloy of silicon and at least one kind of transition metal selected from the group consisting of titanium, zirconium, nickel, copper, iron, and molybdenum. The silicon alloy of any of those transition metals has high electron conductivity and high strength, and hence is preferably used. In addition, such silicon alloy is preferred for the following reason as well: when the active material contains any of those transition metals, the transition metal present on the surface of the active material is oxidized into an oxide having a hydroxy group on its surface, and hence adhesiveness with the binder becomes more satisfactory. As the silicon alloy, a silicon-nickel alloy or a silicon-titanium alloy is more preferably used, and a silicon-titanium alloy is particularly preferably used. The content of silicon in the silicon alloy is set to preferably 10 mol% or more, more preferably from 20 mol% to 70 mol% with respect to all metal elements in the alloy. The silicon material may be any of a single crystal, a polycrystal, and a noncrystalline material.

In addition, when the silicon material is used as the active material, an active material other than the silicon material may be used in combination therewith. Examples of such active material include: the above-mentioned carbon materials; conductive polymers, such as polyacenes; and a composite metal oxide represented by $A_XB_YO_Z$ (where A represents an alkali metal or a transition metal, B represents at least one kind selected from metals, such as cobalt, nickel, aluminum, tin, and manganese, O represents an oxygen atom, and X, Y, and Z represent numbers in the ranges of $1.10>X>0.05$, $4.00>Y>0.85$, and $5.00>Z>1.5$, respectively) and other metal oxides. Of those, a carbon material is preferably used in combination with the silicon material because its volume change caused by storage and release of lithium is small.

Examples of the oxide containing a lithium atom include lithium cobalt oxide, lithium nickel oxide, lithium manganese oxide, ternary lithium nickel cobalt manganese oxide, $LiFePO_4$, $LiCoPO_4$, $LiMnPO_4$, and $Li_{0.90}Ti_{0.05}Nb_{0.05}Fe_{0.30}Co_{0.30}Mn_{0.30}PO_4$.

The active material preferably has the form of particles. The number average particle diameter of the active material is preferably from 0.1 μm to 100 μm, more preferably 1 μm to 20 μm.

The number average particle diameter of the active material refers to the value of a particle diameter (D50) at a cumulative frequency of 50% determined when the particles are accumulated in order of increasing particle size in a particle size distribution measured with a particle size distribution-measuring apparatus employing a laser diffraction

method as its measurement principle. Examples of such laser diffraction particle size distribution-measuring apparatus may include the HORIBA LA-300 series and the HORIBA LA-920 series (which are manufactured by Horiba, Ltd.). Each of those particle size distribution-measuring apparatus uses not only primary particles of the active material as evaluation targets, but also secondary particles formed by aggregation of the primary particles as evaluation targets. Therefore, the number average particle diameter obtained with any of those particle size distribution-measuring apparatus can serve as an indicator of the dispersion state of the active material contained in the slurry for an electrical storage device electrode. The number average particle diameter of the active material may also be measured by centrifuging the slurry for an electrical storage device electrode to settle the active material, then removing the supernatant, and subjecting the settled active material to measurement by the above-mentioned method.

With regard to the use ratio of the active material, the active material is used at such a ratio that the content of the binder (heterophasic polymer particles (A)) with respect to 100 parts by mass of the active material is preferably from 0.1 part by mass to 25 parts by mass, more preferably from 0.5 part by mass to 15 parts by mass. When such use ratio is adopted, an electrode that is more excellent in adhesiveness, and besides, has small electrode resistance and is more excellent in charge-discharge characteristic can be produced.

5.1.2. Other Components

The slurry for an electrical storage device electrode according to this embodiment may contain a component other than the above-mentioned components as necessary. Examples of such component include a conductivity-imparting agent, a non-aqueous medium, and a thickener.

<Conductivity-imparting Agent>

Specific examples of the conductivity-imparting agent are as described below. In a lithium ion secondary battery, carbon or the like is used. In a nickel-hydrogen secondary battery, cobalt oxide is used in a positive electrode, and nickel powder, cobalt oxide, titanium oxide, carbon, or the like is used in a negative electrode. In both the batteries, examples of the carbon may include graphite, activated carbon, acetylene black, furnace black, black lead, carbon fiber, and a fullerene. Of those, acetylene black or furnace black may be preferably used. The use ratio of the conductivity-imparting agent is preferably 20 parts by mass or less, more preferably from 1 part by mass to 15 parts by mass, particularly preferably from 2 parts by mass to 10 parts by mass with respect to 100 parts by mass of the active material.

<Non-aqueous Medium>

The slurry for an electrical storage device electrode may contain a non-aqueous medium having a normal boiling point of from 80°C to 350°C from the viewpoint of improving its applicability. Specific examples of such non-aqueous medium include: amide compounds, such as N-methylpyrrolidone, dimethylformamide, and N,N-dimethylacetamide; hydrocarbons, such as toluene, xylene, n-dodecane, and tetralin; alcohols, such as 2-ethyl-1-hexanol, 1-nonanol, and lauryl alcohol; ketones, such as methyl ethyl ketone, cyclohexanone, phorone, acetophenone, and isophorone; esters, such as benzyl acetate, isopentyl butyrate, methyl lactate, ethyl lactate, and butyl lactate; amine compounds, such as o-toluidine, m-toluidine, and p-toluidine; lactones, such as γ-butyrolactone and δ-butyrolactone; and sulfoxide and sulfone compounds, such as dimethyl sulfoxide and sulfolane, and one or more kinds selected therefrom may be used. Of those, N-methylpyrrolidone is preferably used in terms of the stability of the heterophasic polymer particles (A), workability in the application of the slurry for an electrical storage device electrode, and the like.

<Thickener>

The slurry for an electrical storage device electrode may contain the thickener from the viewpoint of improving its coating property. Specific examples of the thickener include the various compounds described for the above-mentioned composition for an adhesive .

When the slurry for an electrical storage device electrode contains the thickener, the use ratio of the thickener is preferably 20 mass% or less, more preferably from 0.1 mass% to 15 mass%, particularly preferably from 0.5 mass% to 10 mass% with respect to the total solid content of the slurry for an electrical storage device electrode.

5.1.3. Production Method for Slurry for Electrical Storage Device Electrode

The slurry for an electrical storage device electrode according to this embodiment may be produced by mixing the above-mentioned composition for an electrical storage device, the active material, and water, and additives to be used as necessary. The mixing may be performed by stirring by a known technique, and for example, a stirrer, a defoaming

machine, a bead mill, or a high-pressure homogenizer may be utilized.

For the mixing and stirring for producing the slurry for an electrical storage device electrode, it is necessary to select a mixer capable of stirring to such a degree that no aggregate of the active material remains in the slurry, and select necessary and sufficient dispersion conditions. The degree of dispersion may be measured with a grind gauge, and it is preferred that the mixing and dispersion be performed so as to eliminate at least an aggregate larger than 100 μm. Examples of the mixer that satisfies such condition may include a ball mill, a sand mill, a pigment disperser, a grinder, an ultrasonic disperser, a homogenizer, a planetary mixer, and a Hobart mixer.

5.2. Slurry for Protective Film

The slurry for a protective film refers to a dispersion to be used for forming a protective film on the surface of an electrode or a separator, or both thereof by being applied to the surface of the electrode or the separator, or both thereof, and then dried. The slurry for a protective film according to this embodiment contains the above-mentioned composition for an electrical storage device, and inorganic particles. Each component contained in the slurry for a protective film according to this embodiment is described in detail below. The composition for an electrical storage device is as described above, and hence the description thereof is omitted.

5.2.1. Inorganic Particles

By virtue of the fact that the slurry for a protective film according to this embodiment contains the inorganic particles, the toughness of a protective film to be formed can be improved. As the inorganic particles, there may be used, for example, silica, titanium oxide (titania), aluminum oxide (alumina), zirconium oxide (zirconia), or magnesium oxide (magnesia). Of those, titanium oxide and aluminum oxide are preferred from the viewpoint of improving toughness of the protective film. In addition, the titanium oxide is more preferably rutile-type titanium oxide.

The number average particle diameter of the inorganic particles is preferably 1 μm or less, and more preferably falls within the range of from 0.1 μm to 0.8 μm. The number average particle diameter of the inorganic particles is preferably larger than the average pore diameter of the separator that is a porous film. With this, damage to the separator can be alleviated and the inorganic particles can be prevented from clogging the fine pores of the separator.

The number average particle diameter of the inorganic particles refers to the value of a particle diameter (D50) at a cumulative frequency of 50% determined when the particles are accumulated in order of increasing particle size in a particle size distribution measured with a particle size distribution-measuring apparatus employing a laser diffraction method as its measurement principle. Examples of such laser diffraction particle size distribution-measuring apparatus may include the HORIBA LA-300 series and the HORIBA LA-920 series (which are manufactured by Horiba, Ltd.). Each of those particle size distribution-measuring apparatus uses not only primary particles of the inorganic particles as evaluation targets, but also secondary particles formed by aggregation of the primary particles as evaluation targets. Therefore, the number average particle diameter obtained with any of those particle size distribution-measuring apparatus can serve as an indicator of the dispersion state of the inorganic particles contained in the slurry for a protective film. The number average particle diameter of the inorganic particles may also be measured by centrifuging the slurry for a protective film to settle the inorganic particles, then removing the supernatant, and subjecting the settled inorganic particles to measurement by the above-mentioned method.

The slurry for a protective film according to this embodiment contains preferably 0.1 part by mass to 20 parts by mass, more preferably 1 part by mass to 10 parts by mass of the above-mentioned composition for an electrical storage device in terms of solid content with respect to 100 parts by mass of the inorganic particles. When the content of the composition for an electrical storage device falls within the above-mentioned range, a protective film to be formed strikes a satisfactory balance between toughness and lithium ion permeability, and as a result, the resistance increase rate of an electrical storage device to be obtained can be further lowered.

5.2.2. Other Components

The slurry for a protective film according to this embodiment may use the materials (the conductivity-imparting agent, the non-aqueous medium, the thickener, and the like) and addition amounts described for the above-mentioned slurry for an electrical storage device electrode as necessary.

5.2.3. Production Method for Slurry for Protective Film

The slurry for a protective film according to this embodiment is prepared by mixing the above-mentioned composition for an electrical storage device and the inorganic particles, and other components to be used as necessary. As means for mixing those components, there may be utilized known mixing apparatus, such as a ball mill, a sand mill,

a pigment disperser, a grinder, an ultrasonic disperser, a homogenizer, a planetary mixer, and a Hobart mixer.

For the mixing and stirring for producing the slurry for a protective film according to this embodiment, it is necessary to select a mixer capable of stirring to such a degree that no aggregate of the inorganic particles remains in the slurry, and select necessary and sufficient dispersion conditions. The degree of dispersion may be measured with a grind gauge, and it is preferred that the mixing and dispersion be performed so as to eliminate at least an aggregate larger than 100 μm. Examples of the mixer that satisfies such condition may include a ball mill, a sand mill, a pigment disperser, a grinder, an ultrasonic disperser, a homogenizer, a planetary mixer, and a Hobart mixer.

## 6. Electrical Storage Device Electrode

### 6.1. First Embodiment

An electrical storage device electrode according to a first embodiment of the present invention includes a current collector and a layer produced on the surface of the current collector using the above-mentioned slurry for an electrical storage device electrode. Such electrical storage device electrode may be produced by applying the above-mentioned slurry for an electrical storage device electrode to the surface of an appropriate current collector, such as a metal foil, to form a coating film, and then drying the coating film to form an active material layer. In the thus produced electrical storage device electrode, an active material layer containing the above-mentioned heterophasic polymer particles (A) and an active material, and optional components added as necessary is bound onto the current collector. Such electrical storage device electrode is excellent in binding property between the active materials and adhesiveness between the current collector and the active material layer, and is satisfactory in charge and discharge rate characteristic, which is one of electrical characteristics. When the heterophasic polymer particles (A) are used as a binder, the polymers contained in the respective phases allow adhesion of the active material at the same bonding point. As a result, it is considered that detachment of the active material can be effectively suppressed even when, for example, an impact on the electrode, or processing involving winding or the like is applied. Therefore, such electrode is suitable as an electrode of an electrical storage device.

FIG. 10 is a cross-sectional view for schematically illustrating the electrical storage device electrode according to the first embodiment. As illustrated in FIG. 10, an electrical storage device electrode 100 includes a current collector 10 and an active material layer 20 formed on the surface of the current collector 10. In the electrical storage device electrode 100 illustrated in FIG. 10, the active material layer 20 is formed only on one surface of the current collector 10 along its longitudinal direction, but the active material layer 20 may be formed on both surfaces.

The current collector 10 is not particularly limited as long as the current collector 10 is formed of a conductive material. In a lithium ion secondary battery, a current collector made of a metal, such as iron, copper, aluminum, nickel, or stainless steel, is used. Particularly when aluminum and copper are used for a positive electrode and a negative electrode, respectively, the effect of the slurry for an electrical storage device electrode produced using the above-mentioned composition for an electrical storage device is expressed most effectively. As a current collector in a nickel-hydrogen secondary battery, for example, a perforated metal, an expanded metal, a wire mesh, a foam metal, mesh-like sintered metal fiber, or a metal-plated resin sheet is used. The shape and thickness of the current collector are not particularly limited, but a current collector of a sheet shape having a thickness of from about 0.001 mm to about 0.5 mm is preferred.

A method of applying the slurry for an electrical storage device electrode to the current collector 10 is also not particularly limited. The application may be performed by an appropriate method, such as a doctor blade method, a dipping method, a reverse roll method, a direct roll method, a gravure method, an extrusion method, an immersion method, or a brush application method. The application amount of the slurry for an electrical storage device electrode is also not particularly limited, but is preferably set to such an amount that the active material layer 20 to be formed after the removal of the liquid medium (which is a concept encompassing both of water and an optionally used non-aqueous medium) has a thickness of from 0.005 mm to 5 mm, more preferably from 0.01 mm to 2 mm. When the thickness of the active material layer 20 falls within the above-mentioned range, an electrolytic solution can be allowed to effectively permeate the active material layer. As a result, the exchange of metal ions between the active material in the active material layer and the electrolytic solution involved in charge and discharge is facilitated, and hence electrode resistance can be further decreased. Therefore, the above-mentioned thickness is preferred. In addition, a case in which the thickness of the active material layer 20 falls within the above-mentioned range is preferred because there is obtained an electrical storage device electrode that has satisfactory adhesiveness without peeling of the active material layer 20 from the current collector 10 even when the electrode is processed by being, for example, folded or wound, and that has rich flexibility.

A method of drying the coating film after its application (method of removing water and an optionally used non-aqueous medium) is also not particularly limited, and the drying may be performed by, for example: drying with warm air, hot air, or low-moisture air; vacuum drying; or drying by irradiation with a (far) infrared ray, an electron beam, or the

like. A drying speed may be appropriately set so that the liquid medium can be removed as quickly as possible within such a speed range that a stress concentration does not cause the active material layer 20 to be cracked or cause the active material layer 20 to be peeled from the current collector 10.

Further, it is preferred that the active material layer 20 after the drying be pressed to increase the density of the active material layer 20 and adjust its porosity to a range to be described below. As a pressing method, there are given methods such as die pressing and roll pressing. Conditions of the pressing should be appropriately set depending on the kind of a pressing machine to be used, and desired values of the porosity and density of the active material layer 20. The conditions can be easily set through a little preliminary experimentation by a person skilled in the art. For example, in the case of the roll pressing, the roll pressing may be performed under the following conditions. The linear pressure of a roll pressing machine is set to a pressure of from 0.1 (t/cm) to 10 (t/cm), preferably from 0.5 (t/cm) to 5 (t/cm), a roll temperature is set to, for example, from 20°C to 100°C, and the feed speed (roll rotational speed) of the current collector after drying is set to from 1 (m/min) to 80 (m/min), preferably from 5 (m/min) to 50 (m/min).

The density of the active material layer 20 after the pressing is preferably from 1.5 (g/cm$^3$) to 5.0 (g/cm$^3$), more preferably from 1.5 (g/cm$^3$) to 4.0 (g/cm$^3$), particularly preferably from 1.6 (g/cm$^3$) to 3.8 (g/cm$^3$). When the density of the active material layer 20 falls within the above-mentioned range, the adhesiveness between the current collector 10 and the active material layer 20 becomes even more satisfactory, and there is obtained an electrical storage device electrode excellent in powder fall-off resistance, and also excellent in electrical characteristic.

The porosity of the active material layer 20 after the pressing is preferably from 10% to 50%, more preferably from 15% to 45%, particularly preferably from 20% to 40%. When the porosity of the active material layer 20 falls within the above-mentioned range, the adhesiveness between the current collector 10 and the active material layer 20 becomes satisfactory, and there is obtained an electrical storage device electrode excellent in powder fall-off resistance, and also excellent in electrical characteristic. In addition, when the porosity of the active material layer 20 falls within the above-mentioned range, an electrolytic solution can be allowed to sufficiently permeate the inside of the active material layer, and the active material surface and the electrolytic solution can be sufficiently brought into contact with each other. As a result, the exchange of lithium ions between the active material and the electrolytic solution is facilitated, and hence satisfactory charge-discharge characteristic can be achieved.

6.2. Second Embodiment

An electrical storage device electrode according to a second embodiment of the present invention includes a protective film produced using the above-mentioned slurry for a protective film. Such electrical storage device electrode may be produced by applying the above-mentioned slurry for a protective film to the surface of an electrode, and then drying the resultant to form a protective film on the surface of the electrode. The protective film in the present invention refers to a film that is present on the surface of an electrical storage device electrode or a separator and contains a binder, inorganic particles, and other components. When the protective film is formed on the surface of the electrode or the separator, or both thereof, a dendrite that is formed on the surface of the electrode through repeated charge and discharge can be inhibited from reaching the surface of the counter electrode, and a short circuit between the electrodes can be effectively prevented. When the heterophasic polymer particles (A) are used as a binder, the polymers contained in the respective phases allow binding of the inorganic particles at the same bonding point. As a result, it is considered that detachment of the inorganic particles can be effectively suppressed even when, for example, an impact on the electrode or the protective film, or processing involving winding or the like is applied.

The electrical storage device electrode according to the second embodiment may be applied to any of a positive electrode and a negative electrode. The electrical storage device electrode according to the second embodiment is described below with reference to the drawings.

FIG. 11 is a cross-sectional view for schematically illustrating the electrical storage device electrode according to the second embodiment. As illustrated in FIG. 11, an electrical storage device electrode 200 includes a current collector 110, an active material layer 120 formed on the surface of the current collector 110, and a protective film 130 formed on the surface of the active material layer 120. In the electrical storage device electrode 200 illustrated in FIG. 11, the active material layer 120 and the protective film 130 are formed only on one surface of the current collector 110 along its longitudinal direction, but the active material layer 120 and the protective film 130 may be formed on both surfaces.

The current collector 110 is not particularly limited as long as the current collector 110 is formed of a conductive material. In a lithium ion secondary battery, a current collector made of a metal, such as iron, copper, aluminum, nickel, or stainless steel, is used. Aluminum and copper are particularly preferably used for a positive electrode and a negative electrode, respectively. As a current collector in a nickel-hydrogen secondary battery, for example, a perforated metal, an expanded metal, a wire mesh, a foam metal, mesh-like sintered metal fiber, or a metal-plated resin sheet is used. The shape and thickness of the current collector are not particularly limited, but a current collector of a sheet shape having a thickness of from about 0.001 mm to about 0.5 mm is preferred.

The active material layer 120 is a layer formed by applying a slurry containing a binder and an active material

to the surface of the current collector 110 and drying the resultant. The thickness of the active material layer 120 is not particularly limited, but is generally from 0.005 mm to 5 mm, preferably from 0.01 mm to 2 mm. When the thickness of the active material layer falls within the above-mentioned range, an electrolytic solution can be allowed to effectively permeate the active material layer. As a result, the exchange of metal ions between the active material in the active material layer and the electrolytic solution involved in charge and discharge is facilitated, and hence electrode resistance can be further decreased. Therefore, the above-mentioned thickness is preferred. In addition, a case in which the thickness of the active material layer falls within the above-mentioned range is preferred because there is obtained an electrical storage device electrode that has satisfactory adhesiveness without peeling of the active material layer from the current collector even when the electrode is subjected to molding processing by being, for example, folded or wound, and that has rich flexibility.

A method of applying the slurry for an electrical storage device electrode to the current collector 110 is not particularly limited. The application may be performed by an appropriate method, such as a doctor blade method, a dipping method, a reverse roll method, a direct roll method, a gravure method, an extrusion method, an immersion method, or a brush application method. The application amount of the slurry for an electrical storage device electrode is also not particularly limited, but is preferably set to such an amount that the active material layer to be formed after the removal of the liquid medium (which is a concept encompassing both of water and an optionally used non-aqueous medium) has a thickness of from 0.005 mm to 5 mm, more preferably from 0.01 mm to 2 mm.

A method of drying the coating film after its application (method of removing water and an optionally used non-aqueous medium) is also not particularly limited, and the drying may be performed by, for example: drying with warm air, hot air, or low-moisture air; vacuum drying; or drying by irradiation with a (far) infrared ray, an electron beam, or the like. A drying speed may be appropriately set so that the liquid medium can be removed as quickly as possible within such a speed range that a stress concentration does not cause the active material layer to be cracked or cause the active material layer to be peeled from the current collector. The drying treatment of the coating film is performed in the temperature range of preferably from 20°C to 250°C, more preferably from 50°C to 150°C for a treatment time of preferably from 1 minute to 120 minutes, more preferably from 5 minutes to 60 minutes.

Further, it is preferred that the active material layer 120 after the drying be pressed to increase the density of the active material layer 120 and adjust its porosity to a range to be described below. As a pressing method, there are given methods such as die pressing and roll pressing. Conditions of the pressing should be appropriately set depending on the kind of a pressing machine to be used, and desired values of the porosity and density of the active material layer. The conditions can be easily set through a little preliminary experimentation by a person skilled in the art. For example, in the case of the roll pressing, the roll pressing may be performed under the following conditions. The linear pressure of a roll pressing machine is set to a pressure of from 0.1 (t/cm) to 10 (t/cm), preferably from 0.5 (t/cm) to 5 (t/cm), a roll temperature is set to, for example, from 20°C to 100°C, and the feed speed (roll rotational speed) of the current collector after drying is set to from 1 (m/min) to 80 (m/min), preferably from 5 (m/min) to 50 (m/min).

The density of the active material layer after the pressing is preferably from 1.5 (g/cm$^3$) to 5.0 (g/cm$^3$), more preferably from 1.5 (g/cm$^3$) to 4.0 (g/cm$^3$), particularly preferably from 1.6 (g/cm$^3$) to 3.8 (g/cm$^3$).

The protective film 130 is a layer formed by applying the above-mentioned slurry for a protective film to the surface of the active material layer 120 and drying the resultant. A method of applying the slurry for a protective film to the active material layer 120 is not particularly limited. The application may be performed by an appropriate method, such as a doctor blade method, a dipping method, a reverse roll method, a direct roll method, a gravure method, an extrusion method, an immersion method, or a brush application method. The drying treatment of the coating film is performed in the temperature range of preferably from 20°C to 250°C, more preferably from 50°C to 150°C for a treatment time of preferably from 1 minute to 120 minutes, more preferably from 5 minutes to 60 minutes.

The electrical storage device electrode 200 thus produced is guarded with the protective film even when a dendrite is precipitated through repeated charge and discharge. Accordingly, a short circuit between the electrodes can be prevented, and, by extension, a function as an electrical storage device is maintained.

7. Separator for Electrical Storage Device

A separator for an electrical storage device according to an embodiment of the present invention is a separator for an electrical storage device including a protective film on its surface. The separator for an electrical storage device according to this embodiment is described below with reference to the drawings.

FIG. 12 is a cross-sectional view for schematically illustrating the separator for an electrical storage device according to this embodiment. As illustrated in FIG. 12, a separator 300 for an electrical storage device includes a separator 240 and a protective film 230 formed on the surface of the separator 240. In the separator 300 for an electrical storage device illustrated in FIG. 12, the protective film 230 is formed only on one surface of the separator 240 along its longitudinal direction, but the protective film 230 may be formed on both surfaces.

As the separator 240, any separator may be used as long as the separator is electrically stable, is chemically

stable against an active material or a solvent, and does not have electrical conductivity. For example, a nonwoven polymer fabric, a porous film, or a paper-like material formed of glass or ceramics fiber may be used, and a plurality thereof may be used as a laminate. In particular, a porous polyolefin film is preferably used, and a composite of the porous polyolefin film with a heat-resistant material formed of polyimide, glass or ceramics fiber, or the like may be used.

The protective film 230 may be formed by applying the above-mentioned slurry for a protective film to the surface of the separator 240, and then drying the resultant. As a method of applying the slurry for a protective film to the surface of the separator 240, a method such as a doctor blade method, a reverse roll method, a comma bar method, a gravure method, an air knife method, or a die coating method may be applied. The drying treatment of the coating film is performed in the temperature range of preferably from 20°C to 250°C, more preferably from 50°C to 150°C for a treatment time of preferably from 1 minute to 120 minutes, more preferably from 5 minutes to 60 minutes.

When a functional layer is formed on the surface of the separator 240, the protective film 230 may be formed on the surface of the functional layer by applying the above-mentioned slurry for a protective film to the surface of the functional layer and drying the resultant.

The separator 300 for an electrical storage device thus produced is guarded with the protective film even when a dendrite is precipitated through repeated charge and discharge. Accordingly, a short circuit between the electrodes can be prevented, and, by extension, a function as an electrical storage device is maintained.

8. Electrical Storage Device

An electrical storage device according to an embodiment of the present invention only needs to include at least one of the above-mentioned electrical storage device electrode or the above-mentioned separator including the protective film. As a specific production method for the electrical storage device, there is given a method involving: interposing, between a positive electrode and a negative electrode, a separator for preventing a short circuit between the electrodes to form a laminate, or laminating a positive electrode, a separator, a negative electrode, and a separator in the stated order to form an electrode/separator laminate; placing the laminate in a battery container in a state of, for example, being wound or folded in accordance with a battery shape; injecting an electrolytic solution into the battery container; and sealing the battery container. The shape of the battery may be an appropriate shape, for example, a coin shape, a button shape, a sheet shape, a cylindrical shape, a square shape, or a flat shape.

The electrolytic solution may be a liquid or a gel, and an electrolytic solution effectively expressing a function as a battery may be selected from known electrolytic solutions to be used for electrical storage devices depending on the kind of the active material. The electrolytic solution may be a solution obtained by dissolving an electrolyte in an appropriate solvent.

As the electrolyte, in a lithium ion secondary battery, any hitherto known lithium salt may be used, and specific examples thereof may include $LiClO_4$, $LiBF_4$, $LiPF_6$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $LiCF_3SO_3$, $LiCH_3SO_3$, $LiC_4F_9SO_3$, $Li(CF_3SO_2)_2N$, and a lower fatty acid lithium carboxylate. In a nickel-hydrogen secondary battery, for example, a hitherto known aqueous solution of potassium hydroxide having a concentration of 5 mol/liter or more may be used.

The solvent for dissolving the electrolyte is not particularly limited. Specific examples thereof may include: carbonate compounds, such as propylene carbonate, ethylene carbonate, butylene carbonate, dimethyl carbonate, methyl ethyl carbonate, and diethyl carbonate; lactone compounds, such as $\gamma$-butyrolactone; ether compounds, such as trimethoxymethane, 1,2-dimethoxyethane, diethyl ether, 2-ethoxyethane, tetrahydrofuran, and 2-methyltetrahydrofuran; and sulfoxide compounds, such as dimethyl sulfoxide, and one or more kinds selected therefrom may be used. The concentration of the electrolyte in the electrolytic solution is preferably from 0.5 mol/L to 3.0 mol/L, more preferably from 0.7 mol/L to 2.0 mol/L.

9. Examples

The present invention is specifically described below by way of Examples, but the present invention is by no means limited to these Examples. The terms "part(s)" and "%" in Examples and Comparative Examples are by mass, unless otherwise stated.

9.1. Production and Physical Property Evaluation of Composition A for Adhesive

An autoclave including a stirrer and capable of temperature control was loaded with 192 parts by mass of water, 0.1 part by mass of sodium dodecylbenzenesulfonate, 0.3 part by mass of potassium persulfate, 0.05 part by mass of sodium hydrogen sulfite, and 1.2 parts by mass of t-dodecyl mercaptan, and the temperature was increased to 35°C. After that, while the temperature was maintained at 35°C, an emulsion containing 72.5 parts by mass of 2-ethylhexyl acrylate, 10.9 parts by mass of methyl methacrylate, 5 parts by mass of hydroxyethyl methacrylate, 3.6 parts by mass

of methacrylic acid, 0.9 part by mass of sodium dodecylbenzenesulfonate, 33.33 parts by mass of water, 0.032 part by mass of sodium hydrogen sulfite, and 0.065 part by mass of ferrous sulfate heptahydrate was added over 4 hours. After the completion of the addition, the reaction conversion rate was confirmed to be 85% or more, and 5 parts by mass of 1,3-butadiene was added. Then, while the temperature was maintained at 35°C, an aqueous solution containing 0.032 part by mass of sodium hydrogen sulfite, 0.065 part by mass of ferrous sulfate heptahydrate, and 6.33 parts by mass of water was added over 5 hours. After the completion of the addition, the temperature was kept constant at 35°C, and when the reaction conversion rate reached from 95% to 100%, the mixture was cooled to normal temperature. Finally, the pH was adjusted to 8.0 with ammonium hydroxide, the mixture was concentrated, and then 2-methyl-4-isothiazolin-3-one was added at 0.01 part by mass in terms of solid content with respect to 100 parts by mass of the mixture to provide a composition A for an adhesive containing 45 mass% of polymer particles having a number average particle diameter of 125 nm.

The resultant composition A for an adhesive was stained with osmium, and then dried on a collodion film at room temperature to produce a sample for a transmission microscope. The structure of each of the contained polymer particles was observed with a transmission electron microscope (TEM, manufactured by Hitachi, Ltd., H-7650). As a result, the polymer particles were found to be heterophasic polymer particles each having a side-by-side heterophasic structure in which polybutadiene was localized as illustrated in FIG. 5.

<Measurement of Glass Transition Temperature>

The resultant composition A for an adhesive was dried at room temperature, and the glass transition points of the contained polymer particles was measured with a differential scanning calorimeter (DSC, manufactured by NETZSCH, DSC204F1). As a result, bimodal glass transition temperatures Tg were observed at -62°C and -43°C.

<Measurement of THF Insoluble Content>

About 10 g of the resultant composition A for an adhesive was weighed in a Teflon (trademark) dish having a diameter of 8 cm, and was dried at 120°C for 1 hour to form a film. 1 g of the resultant film (polymer) was immersed in 400 mL of tetrahydrofuran (THF), and shaken at 50°C for 3 hours. Then, the THF phase was filtered through a wire mesh of 300 mesh to separate an insoluble content, and then the THF of a soluble content was removed by evaporation. The weight (X (g)) of the resultant residue was measured. A THF insoluble content was calculated from the measured value by the following formula (3) to be 7%.

$$\text{THF insoluble content (\%)} = ((1-X)/1) \times 100 \cdots\cdots (3)$$

<Measurement of MEK Insoluble Content>

2 g of the resultant composition A for an adhesive was weighed in a Teflon (trademark) dish having a diameter of 8 cm, and was dried in air for 2 days to form a film. 0.15 g of the resultant film (polymer) was immersed in 50 mL of methyl ethyl ketone (MEK), and shaken at 50°C for 3 hours. Then, the MEK phase was filtered through a wire mesh of 300 mesh to separate an insoluble content, and then the MEK of a soluble content was removed by evaporation. The weight (Y (g)) of the resultant residue was measured. A MEK insoluble content was calculated from the measured value by the following formula (4) to be 5%.

$$\text{MEK insoluble content (\%)} = ((1-Y)/1) \times 100 \cdots\cdots (4)$$

9.2. Production and Physical Property Evaluation of Compositions B to H for Adhesives

Compositions B to H for adhesives were each produced and subjected to physical property evaluation in the same manner as in Example 1 except that the emulsion composition and the amount of butadiene to be additionally supplied were changed to a composition and amount shown in Table 1 below.

Table 1

| Kind of composition for adhesive | | A | B | C | D | E | F | G | H |
|---|---|---|---|---|---|---|---|---|---|
| Emulsion composition (part (s) by mass) | Butadiene | 2.5 | 5 | 0 | 10 | 0 | 0 | 5 | 95 |
| | Divinylbenzene | 0 | 0 | 0 | 0 | 0 | 1 | 2 | 0 |
| | 2-Ethylhexyl acrylate | 72.5 | 70.5 | 70.5 | 70.5 | 80.5 | 30 | 50 | 0 |
| | Methyl methacrylate | 10.9 | 10.9 | 10.9 | 10.9 | 10.9 | 10.5 | 5.0 | 0 |
| | Hydroxyethyl methacrylate | 5 | 5 | 5 | 5 | 5 | 0 | 3 | 0 |
| | Methacrylic acid | 3.6 | 3.6 | 3.6 | 3.6 | 3.6 | 3.0 | 5.0 | 5.0 |
| Additional supply (part(s) by mass) | Butadiene | 5 | 5 | 10 | 0 | 0 | 56 | 20 | 0 |
| | Acrylonitrile | 0 | 0 | 0 | 0 | 0 | 0 | 10 | 0 |
| Physical properties of polymer particles | Number average particle diameter (nm) | 125 | 100 | 115 | 105 | 145 | 350 | 250 | 180 |
| | THF insoluble content (%) | 7 | 5 | 8 | 60 | 14 | 86 | 75 | 63 |
| | MEK insoluble content (%) | 5 | 1 | 0 | 15 | 0 | 66 | 53 | 80 |
| | Tg (°C) | -62/-43 | -59/-45 | -45 | -45 | -43 | -77/-7 | -33/-26 | -75 |
| | Particle structure | Heterophasic structure | Heterophasic structure | Heterophasic structure | Uniform structure | Uniform structure | Heterophasic structure | Heterophasic structure | Uniform structure |

9.3. Evaluation of Compositions for Adhesives (Examples 1 to 3, and Comparative Examples 1 and 2)

<Evaluation of Adhesive Strength>

To 100 parts by mass of each composition for an adhesive produced above, 25% ammonia water was added to adjust the pH to 8.0, and then a polycarboxylic acid-based emulsion-type thickener "PRIMAL ASE-60" (manufactured by Japan Acrylic Chemical Co., Ltd.) was added to adjust the viscosity to 5,000 mPa·s (BM type). Thus, an adhesive composition for a test was obtained.

With the use of an applicator having a gap of 15/10,00 inch, the adhesive composition for a test was applied to the surface of a base material formed of a polyester film (thickness: 25 μm), and the coating film was dried at 110°C for 1 minute to produce an adhesive tape having an adhesive layer (20 g/$m^2$ to 25 g/$m^2$) formed on the surface of the base material.

The produced adhesive tape was subjected to a 180° peeling test in conformity to JIS Z 0237. In this test, a stainless-steel plate (SUS) and a polypropylene (PP) plate (size: 50 mm×150 mm×1.5 mm) were each used as a test plate (adherend), and a measurement temperature was set to 25°C. The results are shown in Table 2. The value of adhesive strength is preferably as large as possible, but for practical purposes, an adhesive strength of 2.5 N/10 mm or more may be judged to be satisfactory.

<Evaluation of Damping Property (Loss Tangent: tan δ)>

Each composition for an adhesive produced above was dried at 25°C to produce a cast film having a thickness of 1 mm, and its loss tangent (tan δ) was measured with a measuring apparatus (manufactured by Anton Paar, model number: "Physical MCR-301") under the following two sets of conditions. The results are shown in Table 2.

•Evaluation of Temperature Dependence of Loss Tangent

Measurement frequency: 1 Hz (fixed)
Measurement temperature: 15°C, 25°C, 40°C, 80°C (a value at each temperature is shown in Table 2).

•Evaluation of Frequency Dependence of Loss Tangent

Measurement frequency: 1 Hz, 5 Hz, 10 Hz, 15 Hz (a value at each frequency is shown in Table 2)
Measurement temperature: 40°C (fixed)

The value of the loss tangent (tan δ) is preferably as high as possible, but for practical purposes, when the value is 0.5 or more, damping performance may be judged to be satisfactory. In addition, a difference (Δtan δ) between the maximum value and minimum value of the loss tangent (tan δ) obtained as a result of the evaluation of the temperature dependence of the loss tangent is preferably as small as possible, but for practical purposes, when the value of the Δtan δ is 0.1 or less, damping performance may be judged to be satisfactory. Further, a difference (Δtan δ) between the maximum value and minimum value of the loss tangent (tan δ) obtained as a result of the evaluation of the frequency dependence of the loss tangent is preferably as small as possible, but for practical purposes, when the value of the Δtan δ is 0.05 or less, damping performance may be judged to be satisfactory.

Table 2

| | | Example 1 | Example 2 | Example 3 | Comparative Example 1 | Comparative Example 2 |
|---|---|---|---|---|---|---|
| Composition for adhesive | | A | B | C | D | E |
| Adhesive strength (N/10 mm) | sus | 6.3 | 5.7 | 2.5 | 1.9 | 2.4 |
| | PP | 5.8 | 5.3 | 2.5 | 1.9 | 1.7 |

(continued)

| | | | Example 1 | Example 2 | Example 3 | Comparative Example 1 | Comparative Example 2 |
|---|---|---|---|---|---|---|---|
| Loss tangent (tan δ) | 1 Hz | Peak temperature (°C) | -14 | -17 | -18 | -20 | -15 |
| | | 15°C | 0.81 | 0.8 | 0.63 | 0.53 | 0.53 |
| | | 25°C | 0.85 | 0.84 | 0.62 | 0.45 | 0.38 |
| | | 40°C | 0.85 | 0.88 | 0.64 | 0.37 | 0.29 |
| | | 80°C | 0.81 | 0.87 | 0.68 | 0.33 | 0.28 |
| | | Temperature dependence Δtan δ (Max-Min) | 0.04 | 0.08 | 0.05 | 0.2 | 0.25 |
| | 40°C | 1 Hz | 0.85 | 0.88 | 0.64 | 0.37 | 0.29 |
| | | 5 Hz | 0.85 | 0.9 | 0.64 | 0.45 | 0.41 |
| | | 10 Hz | 0.85 | 0.89 | 0.65 | 0.48 | 0.46 |
| | | 15 Hz | 0.84 | 0.9 | 0.68 | 0.51 | 0.51 |
| | | Frequency dependence Δtan δ (Max-Min) | 0.01 | 0.02 | 0.04 | 0.14 | 0.22 |

9.4. Evaluation of Compositions for Electrical Storage Devices I (Examples 4 to 8 and Comparative Examples 3 to 6)

The compositions for adhesives produced above were used as compositions for electrical storage devices for producing active material layers.

9.4.1. Production of Electrical Storage Device Electrode

A twin-screw planetary mixer (manufactured by Primix Corporation, product name: "TK HIVIS MIX 2P-03") was charged with 1 part by mass (in terms of solid content) of a thickener (product name: "CMC2200", manufactured by Daicel Corporation), 100 parts by mass (in terms of solid content) of graphite serving as a negative electrode active material, and 68 parts by mass of water, and the contents were stirred at 60 rpm for 1 hour. After that, 2 parts by mass (in terms of solid content) of a composition for an electrical storage device shown in Table 3 was added, and the mixture was further stirred for 1 hour to provide a paste. Water was charged to the resultant paste to adjust its solid content to 50%, and then the contents were stirred and mixed using a defoaming stirrer (manufactured by Thinky Corporation, product name: "Awatori Rentaro") at 200 rpm for 2 minutes, at 1,800 rpm for 5 minutes, and then under a vacuum at 1,800 rpm for 1.5 minutes to produce a slurry for an electrical storage device electrode.

The slurry for an electrical storage device electrode produced above was uniformly applied to the surface of a current collector formed of a copper foil having a thickness of 20 μm by a doctor blade method so that a film thickness after drying was 80 μm, and the resultant was subjected to drying treatment at 120°C for 20 minutes. After that, press processing was performed with a roll pressing machine so that the active material layer had a density of 1.6 $g/cm^3$. Thus, an electrical storage device electrode (negative electrode) was obtained.

9.4.2. Evaluation of Electrical Storage Device Electrode

<Evaluation of Powder Fall-off Resistance of Electrical Storage Device Electrode>

Five 10 cm×5 cm test pieces were cut out of the produced negative electrode, and were stacked together. Commercially available woodfree paper was placed on a testing stand, and a stainless-steel mesh of 100 mesh was placed thereon. On the mesh, the five stacked electrode test pieces were cut 9 times with scissors at intervals of 1 cm from an end in a direction perpendicular to a long side into ten 1 cm×5 cm small pieces. At this time, an inspection was carried out for the presence or absence of an active material powder that had passed through the stainless-steel mesh to fall on the woodfree paper. Powder fall-off resistance was evaluated on the basis of the result of the inspection by the

following criteria. The results of the powder fall-off resistance are shown in Table 3.

Satisfactory: A case in which no powder fall-off was found
Unsatisfactory: A case in which even slight powder fall-off was observed

<Evaluation of Adhesiveness of Electrical Storage Device Electrode>

Five 10 cm square samples were cut out of the produced negative electrode, and were each compressed by hot pressing at 120°C for 5 minutes. In the surface of each electrode after the compression, six cuts each having a depth extending from the active material layer to the current collector were made with a knife at intervals of 2 mm in each of longitudinal and latitudinal directions, to thereby make cuts forming 25 squares in a grid shape. An adhesive tape (product name: Cellotape (trademark), model number: CT18-S, manufactured by Nichiban Co., Ltd.) was attached to the entire surface of the portion in which the cuts had been made, and was then immediately peeled off. At this time, the number of squares on the active material layer peeled from the copper foil was counted. The above-mentioned operation was performed once for each sample (each surface), the number of peeled squares out of a total of 125 squares of a total of five samples was counted, and evaluation was performed on the basis of the number by the following criteria. The results are shown in Table 3.

Satisfactory: A case in which the number of detached squares was from 0 to 5
Unsatisfactory: A case in which the number of detached squares was 6 or more

9.4.3. Production of Electrical Storage Device

<Production of Counter Electrode (Positive Electrode)>

A twin-screw planetary mixer (manufactured by Primix Corporation, product name: "TK HIVIS MIX 2P-03") was charged with 4.0 parts by mass (in terms of solid content) of a binder for an electrochemical device electrode (manufactured by Kureha Corporation, product name: "KF Polymer #1120"), 3.0 parts by mass of a conductive aid (manufactured by Denki Kagaku Kogyo Kabushiki Kaisha, product name: "DENKA BLACK 50% press product"), 100 parts by mass (in terms of solid content) of $LiCoO_2$ having a particle diameter of 5 μm (manufactured by Hayashi Kasei Co., Ltd.) serving as a positive electrode active material, and 36 parts by mass of N-methylpyrrolidone (NMP), and the contents were stirred at 60 rpm for 2 hours. NMP was charged into the resultant paste to adjust its solid content to 65%, and then the contents were stirred and mixed using a defoaming stirrer (manufactured by Thinky Corporation, product name: "Awatori Rentaro") at 200 rpm for 2 minutes, at 1,800 rpm for 5 minutes, and then under a vacuum at 1,800 rpm for 1.5 minutes to prepare a slurry for an electrode. The resultant slurry for an electrode was uniformly applied to the surface of a current collector formed of an aluminum foil by a doctor blade method so that a film thickness after drying was 80 μm, and the resultant was subjected to drying treatment at 120°C for 20 minutes. After that, press processing was performed with a roll pressing machine so that the active material layer had a density of 3.0 g/cm$^3$. Thus, a counter electrode (positive electrode) was obtained.

<Assembly of Lithium Ion Battery Cell>

In a glove box in which Ar purging had been performed so that the dew point was -80°C or less, the negative electrode produced above that had been punch-molded to a diameter of 15.95 mm was placed on a bipolar coin cell (manufactured by Hohsen Corp., product name: "HS Flat Cell"). Then, a separator formed of a porous film made of polypropylene that had been punched to a diameter of 24 mm (manufactured by Celgard, LLC, product name: "Celgard #2400") was placed, and further, 500 μL of an electrolytic solution was injected in such a manner as not to let air in. After that, the positive electrode produced above that had been punch-molded to a diameter of 16.16 mm was placed, and the exterior body of the bipolar coin cell was fastened with screws for sealing. Thus, a lithium ion battery cell (electrical storage device) was assembled. The electrolytic solution used in this case is a solution obtained by dissolving $LiPF_6$ at a concentration of 1 mol/L in a solvent containing ethylene carbonate and ethyl methyl carbonate at a mass ratio of 1/1.

9.4.4. Evaluation of Electrical Storage Device

<Measurement of Ratio of Unsatisfactory Batteries>

For each of twenty of the electrical storage devices produced above, charge was started at a constant current (0.2C). At the time point when the voltage reached 4.2 V, the charge was subsequently continued at a constant voltage

(4.2 V). The time point when the current value reached 0.01C was defined as charge completion (cut-off), and a charge capacity at 0.2C was measured. Then, discharge was started at a constant current (0.2C). The time point when the voltage reached 2.7 V was defined as discharge completion (cut-off), and a discharge capacity at 0.2C was measured.

Next, for the same cell, charge was started at a constant current (3C). At the time point when the voltage reached 4.2 V, the charge was subsequently continued at a constant voltage (4.2 V). The time point when the current value reached 0.01C was defined as charge completion (cut-off), and a charge capacity at 3C was measured. Then, discharge was started at a constant current (3C). The time point when the voltage reached 2.7 V was defined as discharge completion (cut-off), and a discharge capacity at 3C was measured. The results are shown in Table 3.

The above-mentioned measurement was performed 10 times, and the ratio of batteries that were able to be normally charged and discharged was calculated. Evaluation criteria are as described below, and the results are collectively shown in Table 3.

- When the ratio of batteries that were able to be normally charged and discharged was 80% or more, the batteries were judged to normally operate as batteries without a defect, such as powder fall-off, and were marked with "good".
- When the ratio of batteries that were able to be normally charged and discharged was less than 80%, the batteries were judged not to normally operate as batteries with a defect, such as powder fall-off, and were marked with "poor".

In the measurement conditions, "1C" refers to a current value at which discharge is completed in 1 hour when a cell having a certain electric capacity is subjected to constant-current discharge. For example, "0.1C" refers to a current value at which discharge is completed in 10 hours, and "10C" refers to a current value at which discharge is completed in 0.1 hour.

Table 3

| | Example 4 | Example 5 | Example 6 | Example 7 | Example 8 | Comparative Example 3 | Comparative Example 4 | Comparative Example 5 | Comparative Example 6 |
|---|---|---|---|---|---|---|---|---|---|
| Composition for electrical storage device (composition for adhesive) | A | B | C | F | G | D | E | H | E/H |
| Mixing ratio of composition for electrical storage device (weight ratio) | 100 | 100 | 100 | 100 | 100 | 100 | 100 | 100 | 50/50 |
| Powder fall-off resistance | Satisfactory | Satisfactory | Satisfactory | Satisfactory | Satisfactory | Unsatisfactory | Unsatisfactory | Unsatisfactory | Unsatisfactory |
| Adhesiveness | Satisfactory | Satisfactory | Satisfactory | Satisfactory | Satisfactory | Unsatisfactory | Unsatisfactory | Unsatisfactory | Unsatisfactory |
| Measurement of ratio of unsatisfactory batteries | good | good | good | good | good | poor | poor | poor | poor |

9.5. Evaluation of Compositions for Electrical Storage Devices II (Examples 9 to 13 and Comparative Examples 7 to 10)

The compositions for adhesives produced above were used as compositions for electrical storage devices for producing protective films.

<Production and Evaluation of Electrical Storage Device Electrode with Protective Film>

20 Parts by mass of titanium oxide serving as inorganic particles (product name: "KR380", manufactured by Titan Kogyo, Ltd., rutile type, average particle diameter: 0.38 μm) with respect to 100 parts by mass of water, 5 parts by mass of a composition for an electrical storage device shown in Table 4 in terms of solid content with respect to the inorganic particles, and 1 part by mass of a thickener (manufactured by Daicel Corporation, product name: "CMC 1120") were mixed, and the mixture was subjected to mixing and dispersion treatment using T.K. FILMIX™ Model 56-50 (manufactured by Primix Corporation) to prepare a slurry for a protective film having dispersed therein titanium oxide.

The slurry for a protective film obtained above was applied to the surface of the active material layer of the negative electrode produced in Example 4 described above by using a die coating method, and was then dried at 120°C for 5 minutes to form a protective film on the surface of the active material layer. The formed protective film had a thickness of 3 μm. The thus obtained negative electrode with a protective film was evaluated in the same manner as in the "9.4.2. Evaluation of Electrical Storage Device Electrode" section. The results are shown in Table 4.

In addition, an electrical storage device was produced in the same manner as in the "9.4.3. Production of Electrical Storage Device" section, and evaluated in the same manner as in the "9.4.4. Evaluation of Electrical Storage Device" section. The results are shown in Table 4.

Table 4

| | Example 9 | Example 10 | Example 11 | Example 12 | Example 13 | Comparative Example 7 | Comparative Example 8 | Comparative Example 9 | Comparative Example 10 |
|---|---|---|---|---|---|---|---|---|---|
| Composition for electrical storage device (composition for adhesive) | A | B | C | F | G | D | E | H | E/H |
| Mixing ratio of composition for electrical storage device (weight ratio) | 100 | 100 | 100 | 100 | 100 | 100 | 100 | 100 | 50/50 |
| Powder fall-off resistance | Satisfactory | Satisfactory | Satisfactory | Satisfactory | Satisfactory | Unsatisfactory | Unsatisfactory | Unsatisfactory | Unsatisfactory |
| Adhesiveness | Satisfactory | Satisfactory | Satisfactory | Satisfactory | Satisfactory | Unsatisfactory | Unsatisfactory | Unsatisfactory | Unsatisfactory |
| Measurement of ratio of unsatisfactory batteries | good | good | good | good | good | poor | poor | poor | poor |

9.6. Evaluation Results

As apparent from Examples 1 to 3, it was found that the compositions for adhesives according to the present invention each showed a satisfactory adhesive characteristic and a satisfactory damping property. In addition, as apparent from Examples 4 to 13, it was found that the electrical storage device electrodes produced using the compositions for electrical storage devices according to the present invention each had satisfactory characteristics. In addition, it was found that the electrical storage devices produced using those electrodes each operated as a satisfactory battery.

The present invention is not limited to the embodiments described above, and various modifications may be made thereto. The present invention encompasses substantially the same configurations as the configurations described in the embodiments (e.g., configurations having the same functions, methods, and results, or configurations having the same objects and effects). The present invention also encompasses configurations obtained by replacing non-essential parts of the configurations described in the embodiments with other configurations. The present invention also encompasses configurations exhibiting the same action and effect or configurations capable of achieving the same objects as those of the configurations described in the embodiments. The present invention also encompasses configurations obtained by adding known technologies to the configurations described in the embodiments.

Reference Signs List

10, 110 ··· current collector, 20, 120 ··· active material layer, 130, 230 ··· protective film, 240 ··· separator, 100, 200 ··· electrical storage device electrode, 300 ··· separator for electrical storage device

## Claims

**1.** A composition for an adhesive , comprising:

heterophasic polymer particles (A); and
a liquid medium (B),
wherein the heterophasic polymer particles (A) each have:

a repeating unit derived from a conjugated diene;
a repeating unit derived from an unsaturated carboxylic acid ester; and
a repeating unit derived from an unsaturated carboxylic acid.

**2.** The composition for an adhesive according to claim 1, wherein, when the heterophasic polymer particles (A) are subjected to differential scanning calorimetry (DSC) in conformity to JIS K7121, two or more endothermic peaks in a temperature range of from -100°C to 0°C are observed.

**3.** The composition for an adhesive according to claim 1 or 2, wherein the heterophasic polymer particles (A) have a number average particle diameter of from 50 nm to 400 nm.

**4.** The composition for an adhesive according to any one of claims 1 to 3, wherein the heterophasic polymer particles (A) each have a THF insoluble content of 30% or less.

**5.** An adhesive film, which is produced using the composition for an adhesive of any one of claims 1 to 4.

**6.** A composition for an electrical storage device, comprising:

heterophasic polymer particles (A); and
a liquid medium (B),
wherein the heterophasic polymer particles (A) each have:

a phase containing 60 mass% or more of a repeating unit derived from a conjugated diene; and
a phase containing 80 mass% or more in total of a repeating unit derived from an unsaturated carboxylic acid ester and a repeating unit derived from an unsaturated carboxylic acid.

**7.** The composition for an electrical storage device according to claim 6, wherein, when the heterophasic polymer particles (A) are subjected to differential scanning calorimetry (DSC) in conformity to JIS K7121, two or more endothermic peaks in a temperature range of from -100°C to 0°C are observed.

**8.** The composition for an electrical storage device according to claim 6 or 7, wherein the heterophasic polymer particles (A) have a number average particle diameter of from 50 nm to 400 nm.

**9.** The composition for an electrical storage device according to any one of claims 6 to 8, wherein the heterophasic polymer particles (A) each have a THF insoluble content of 50% or more.

**10.** A slurry for an electrical storage device electrode, comprising:

the composition for an electrical storage device of any one of claims 6 to 9; and
an active material.

**11.** An electrical storage device electrode, comprising:

a current collector; and
a layer, which is produced on a surface of the current collector using the slurry for an electrical storage device electrode of claim 10.

**12.** An electrical storage device, comprising the electrical storage device electrode of claim 11.

**13.** A slurry for a protective film, comprising:

the composition for an electrical storage device of any one of claims 6 to 9; and
inorganic particles.

**14.** An electrical storage device electrode, comprising a protective film produced using the slurry for a protective film of claim 13.

**15.** An electrical storage device, comprising the electrical storage device electrode of claim 14.

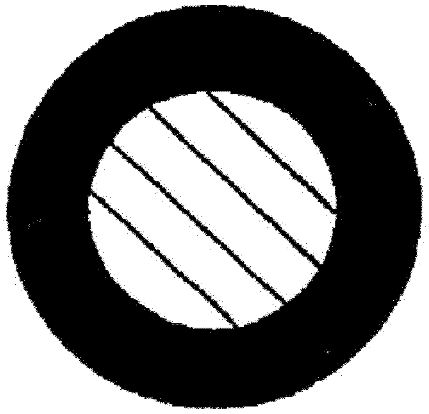

FIG. 1

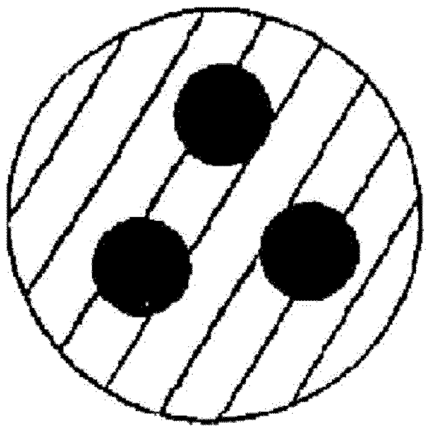

FIG. 2

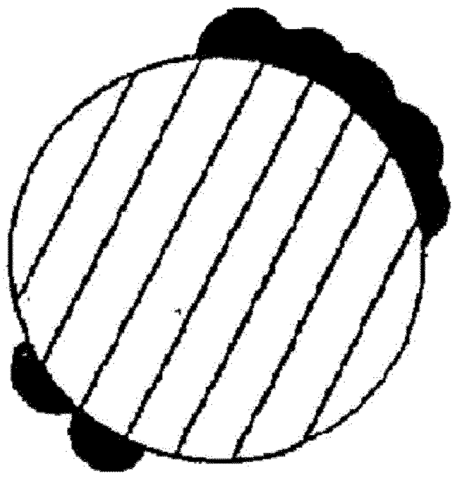

FIG. 3

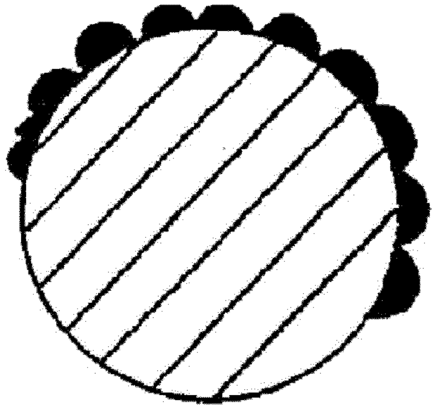

FIG. 4

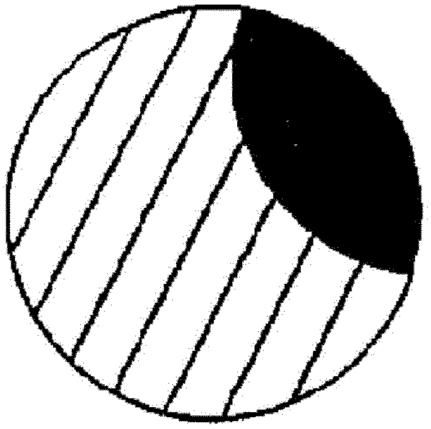

FIG. 5

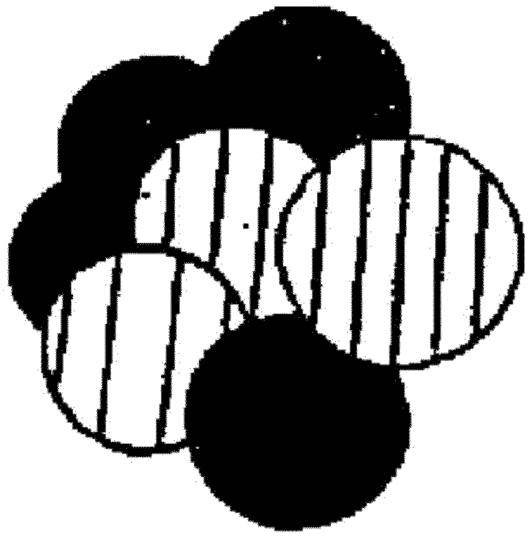

FIG. 6

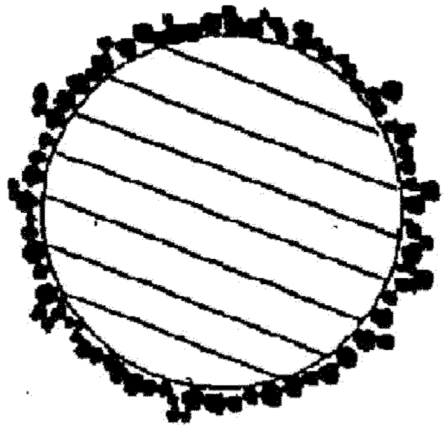

FIG. 7

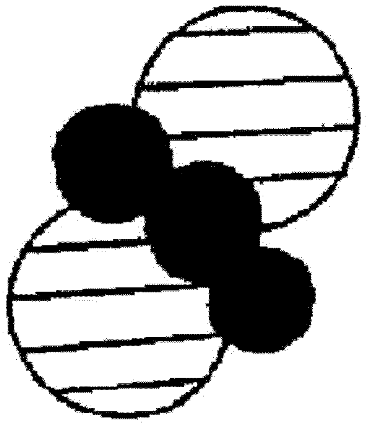

FIG. 8

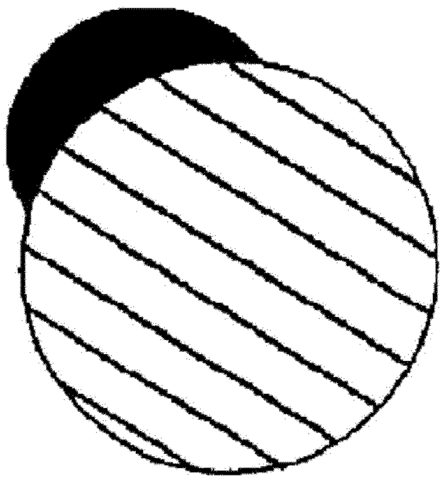

FIG. 9

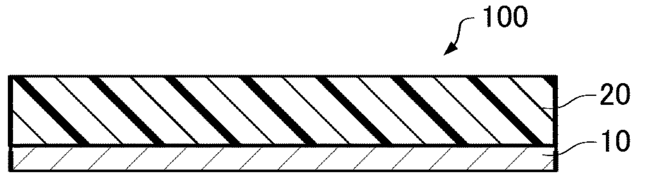


FIG. 10

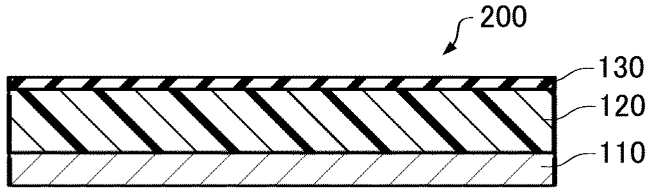


FIG. 11

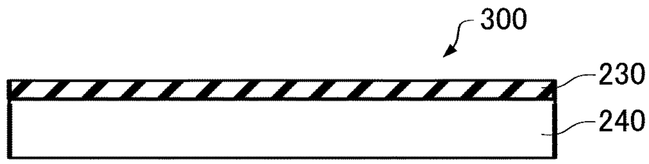


FIG. 12

**INTERNATIONAL SEARCH REPORT**

International application No.
PCT/JP2016/073129

A. CLASSIFICATION OF SUBJECT MATTER
*C09J109/00*(2006.01)i, *C09J7/00*(2006.01)i, *C09J133/02*(2006.01)i, *C09J133/04*(2006.01)i, *H01G11/38*(2013.01)i, *H01M4/13*(2010.01)i, *H01M4/24*(2006.01)i, *H01M4/62*(2006.01)i

According to International Patent Classification (IPC) or to both national classification and IPC

B. FIELDS SEARCHED

Minimum documentation searched (classification system followed by classification symbols)
C09J109/00, C09J7/00, C09J133/02, C09J133/04, H01G11/38, H01M4/13, H01M4/24, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 98/39808 A1 (Nippon Zeon Co., Ltd.), 11 September 1998 (11.09.1998), claims; examples 2, 5; fig. 1 to 9 & US 2003/0113626 A1 fig. 1 to 9; examples 2, 5; claims | 1,3,5<br>2,4,6-15 |
| A | JP 2005-166756 A (Nippon Zeon Co., Ltd.), 23 June 2005 (23.06.2005), paragraphs [0014], [0019], [0050]; table 1 (Family: none) | 1-15 |
| A | JP 2010-53347 A (JSR Corp.), 11 March 2010 (11.03.2010), claims; paragraph [0070] & TW 201011087 A | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 October 2016 (28.10.16) | 08 November 2016 (08.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/073129

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-211246 A (JSR Corp.), 10 October 2013 (10.10.2013), claims 1, 2; paragraphs [0044] to [0048] & KR 10-2013-0099872 A & CN 103289617 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238927 A
- JP 2003041216 A
- JP 2010255007 A
- JP 2013030449 A
- JP 2011005867 A
- JP 2012151108 A
- JP 2009054455 A
- JP 2004185810 A
- JP 2005259697 A


### Non-patent literature cited in the description


- *Adhesion and adhesives,* vol. 34 (1), 13-23